(19) Europäisches Patentamt

European Patent Office

Office européen des brevets

(11) EP 4 628 252 A1

(12) **EUROPEAN PATENT APPLICATION**
published in accordance with Art. 153(4) EPC

(43) Date of publication:
08.10.2025 Bulletin 2025/41

(21) Application number: 23897548.6

(22) Date of filing: 17.11.2023

(51) International Patent Classification (IPC):
*B23Q 15/18* (2006.01) *B23Q 3/155* (2006.01)
*B23Q 17/00* (2006.01) *G05B 19/404* (2006.01)

(52) Cooperative Patent Classification (CPC):
**B23Q 3/155; B23Q 15/18; B23Q 17/00;
G05B 19/404**

(86) International application number:
**PCT/JP2023/041430**

(87) International publication number:
**WO 2024/116897 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.11.2022 JP 2022190645**

(71) Applicant: **BROTHER KOGYO KABUSHIKI
KAISHA
Nagoya-shi, Aichi 467-8561 (JP)**

(72) Inventor: **TERADA Yuzuru
Nagoya-shi, Aichi 467-8562 (JP)**

(74) Representative: **Becker, Eberhard
Becker Kurig & Partner
Patentanwälte mbB
Bavariastraße 7
80336 München (DE)**

(54) **NUMERICAL CONTROL DEVICE AND DETERMINATION METHOD**

(57) The present invention provides a numerical control device and a determination method in which it is possible to accurately determine the mounting state of a tool on a main shaft. A numerical control device according to the present invention estimates the amount of expansion and contraction of a ball screw. The numerical control device acquires a rotation angle and disturbance force of a Z-axis motor. The numerical control device acquires the torque of the Z-axis motor to acquire the disturbance force included in the torque. The numerical control device determines the mounting state of a tool on a main shaft on the basis of the amount of expansion and contraction of the ball screw, and a peak angle determined by fluctuation of a derivative value, which is the time derivative of the disturbance force (S101).

FIG. 15

EP 4 628 252 A1

## Description

Technical Field

The present disclosure relates to a numerical control device and a determination method.

Related Art

Patent Document 1 discloses a numerical control device in which it is determined whether a tool is mounted on a main shaft of a machine tool. The machine tool includes a main shaft, a main shaft head, and a Z-axis motor. The main shaft is rotatably provided on the main shaft head. The main shaft head is lifted and lowered by the drive of the Z-axis motor. During mounting of the tool on the main shaft, the main shaft head is lowered by the drive of the Z-axis motor. At this time, the numerical control device differentiates a torque applied to the Z-axis motor. Based on a differential value of the torque and a position of the main shaft head, the numerical control device decides a peak position of the differential value that varies according to the position of the main shaft head. The numerical control device performs statistical processing on the decided peak position, and determines a mounted state of the tool with respect to the main shaft based on a calculated statistical value.

Prior Art Documents

Patent Documents

Patent Document 1: Japanese Patent Laid-Open No. 2022-56673

SUMMARY OF INVENTION

Technical Problem

In the machine tool, a feed shaft may be provided as a mechanism for lifting and lowering the main shaft head. The feed shaft extends in an up-down direction. The feed shaft is capable of positive and reverse rotation around an axis extending in the up-down direction by the drive of the Z-axis motor. A nut is fixed to the main shaft head. The nut is screwed onto the feed shaft. When the feed shaft rotates in the positive and reverse directions, the nut and the main shaft head to which the nut is fixed integrally rise and lower.

The feed shaft expands and contracts in the up-down direction due to a temperature change thereof. When the feed shaft expands and contracts, the peak position of the differential value of the torque calculated in order to determine the mounted state of the tool with respect to the main shaft varies. Thus, it cannot be specified whether the variation in the peak position is due to the influence of expansion and contraction of the feed shaft or the influence of the mounted state of the tool, and there is a risk that the numerical control device may not be able to accurately determine the mounted state of the tool.

An object of the present disclosure is to provide a numerical control device and a determination method in which a mounted state of a tool with respect to a main shaft can be accurately determined.

Solution to Problem

A numerical control device of claim 1 is a numerical control device that controls an operation of a machine tool, the machine tool including a main shaft that mounts a tool, a feed shaft extending in a predetermined direction, and a motor that rotates the feed shaft around an axis extending in the predetermined direction, in which the motor rotates the feed shaft to thereby move the main shaft and allow the tool gripped by a tool changer to be mounted on the main shaft. The numerical control device is characterized by including: an estimation part, estimating an expansion and contraction amount of the feed shaft in the predetermined direction; a first acquisition part, acquiring a torque of the motor in a mounting operation of the tool; and a determination part, determining a mounted state of the tool with respect to the main shaft based on the expansion and contraction amount estimated by the estimation part and the torque acquired by the first acquisition part.

The numerical control device estimates the expansion and contraction amount of the feed shaft according to a configuration for controlling the torque of the motor. Based on the estimated expansion and contraction amount and the torque of the motor, the numerical control device determines the mounted state of the tool with respect to the main shaft. Since the numerical control device takes into consideration the expansion and contraction amount, the mounted state of the tool with respect to the main shaft can be accurately determined.

In the numerical control device of claim 2, the estimation part may include: a second acquisition part, acquiring information about the motor that drives when moving the main shaft in the predetermined direction via the feed shaft; and a calculation part, calculating the amount of heat entering and exiting the feed shaft based on the information acquired by the second acquisition part. The estimation part may estimate the expansion and contraction amount based on the amount of heat calculated by the calculation part. The numerical control device acquires the information about the motor that rotates the feed shaft, and estimates the expansion and contraction amount of the feed shaft based on the amount of heat calculated based on the acquired information. Accordingly, the numerical control device is able to accurately estimate the expansion and contraction amount of the feed shaft.

In the numerical control device of claim 3, the second acquisition part may acquire, as the information, the torque and a rotation speed of the motor. The numerical control device acquires the torque and the rotation speed of the motor, and calculates the amount of heat entering and exiting the feed shaft based on the acquired torque and rotation speed. Accordingly, the numerical control device is able to accurately calculate the amount of heat entering and exiting the feed shaft.

In the numerical control device of claim 4, the first acquisition part may further acquire the rotation angle of the motor. The determination part may include: a differentiation part, differentiating the torque acquired by the first acquisition part and calculating a differential value of the torque corresponding to the rotation angle; a first decision part, deciding, as a peak angle, the rotation angle corresponding to the differential value indicating either the maximum or the minimum among the differential values calculated by the differentiation part; a second decision part, deciding a corrected peak angle by correcting the peak angle decided by the first decision part based on the expansion and contraction amount estimated by the estimation part; and a correction determination part, determining the mounted state based on the corrected peak angle decided by the second decision part. The numerical control device corrects the peak angle based on the expansion and contraction amount of the feed shaft, and determines the mounted state of the tool with respect to the main shaft based on the corrected peak angle that has been corrected. Accordingly, since a deviation between the peak angle due to expansion and contraction of the feed shaft and an actual position of the main shaft can be suppressed, the numerical control device is able to accurately determine the mounted state of the tool with respect to the main shaft.

In the numerical control device of claim 5, the determination part may include: a storage part, storing the corrected peak angle decided by the second decision part and the number of uses or a use time of the tool with respect to the main shaft in association with each other; a statistical processing part, performing statistical processing based on a plurality of the corrected peak angles stored by the storage part and calculating a statistical value; and a statistical determination part, determining the mounted state based on the statistical value calculated by the statistical processing part. The numerical control device determines the mounted state of the tool based on the statistical value based on multiple corrected peak angles. Accordingly, the numerical control device is able to eliminate the influence of variations in determining the corrected peak angle and accurately determine the mounted state.

In the numerical control device of claim 6, in the case where a difference between the expansion and contraction amount estimated by the estimation part for the n-th (n is an integer equal to or greater than 2) time and the expansion and contraction amount estimated by the estimation part for the (n-1)-th time is less than or equal to a threshold, the determination part may determine the mounted state; in the case where the difference is greater than the threshold, the determination part may not determine the mounted state. In the case where a change amount in the expansion and contraction amount of the feed shaft is excessively large, there is a risk that the estimation part may not be able to accurately estimate the expansion and contraction amount. In the numerical control device, by determining the estimated expansion and contraction amount, erroneous determination of the mounted state due to inaccurate estimation of the expansion and contraction amount can be suppressed.

In the numerical control device of claim 7, the estimation part may estimate the expansion and contraction amount in an estimation period longer than a control period of the numerical control device. Generally, since the time required for expansion and contraction of the feed shaft is sufficiently long relative to the control period of the numerical control device, the numerical control device is able to accurately estimate the expansion and contraction amount of the feed shaft with a small amount of calculation.

In the numerical control device of claim 8, the first acquisition part may acquire the torque and the rotation angle for each control period of the numerical control device. Since the torque and the rotation angle of the motor take positive and negative values, there is a risk that the positive and negative values may be averaged if an acquisition period is long and that a feature value may be lost. Thus, in the numerical control device, the torque and the rotation angle of the motor are acquired for each control period being a smallest unit at which acquisition is possible, and the mounted state of the tool with respect to the main shaft is determined based on the acquired torque and rotation angle. Accordingly, the numerical control device is able to accurately determine the mounted state of the tool with respect to the main shaft.

A determination method of claim 9 is a determination method for a mounted state of a tool with respect to a main shaft in a machine tool, the machine tool including a main shaft that mounts a tool, a feed shaft extending in a predetermined direction, and a motor that rotates the feed shaft around an axis extending in the predetermined direction, in which the motor rotates the feed shaft to thereby move the main shaft to allow the tool gripped by a tool changer to be mounted on the main shaft. The determination method is characterized by including: an estimation process for estimating an expansion and contraction amount of the feed shaft in the predetermined direction; a first acquisition process for acquiring a torque of the motor in a mounting operation of the tool; and a determination process for determining the mounted state based on the expansion and contraction amount estimated by the estimation process and the torque acquired by the first acquisition process. The determination method achieves similar effects to the numerical control device of claim 1.

BRIEF DESCRIPTION OF THE DRAWINGS

FIG. 1 is a perspective view of a machine tool 1.
FIG. 2 is a longitudinal sectional view of surroundings of a main shaft head 7.
FIG. 3 is a longitudinal sectional view of the interior of a main shaft 9.
FIG. 4 is a block diagram showing an electrical configuration of the machine tool 1 and a numerical control device 30.
FIG. 5 is a graph showing a disturbance force F applied to a Z-axis motor 51 and a differential value f, which vary according to a rotation angle $\theta$ of the Z-axis motor 51.
FIG. 6 is a graph showing thermal resistance R that varies according to a feed speed $V_m$.
FIG. 7 is a conceptual diagram of a condition table 59.
FIG. 8 is a flowchart of parameter estimation processing.
FIG. 9 is a flowchart of second drive condition processing.
FIG. 10 is a flowchart showing the continuation of FIG. 9.
FIG. 11 is a graph showing a temporal change in an expansion and contraction amount $L_b$ of a ball screw 41 specified in the parameter estimation processing and an estimation curve of the expansion and contraction amount $L_b$.
FIG. 12 is a flowchart of period acquisition processing.
FIG. 13 is a flowchart of expansion and contraction amount estimation processing.
FIG. 14 is a flowchart of tool change processing.
FIG. 15 is a flowchart showing the continuation of FIG. 14.

DESCRIPTION OF THE EMBODIMENTS

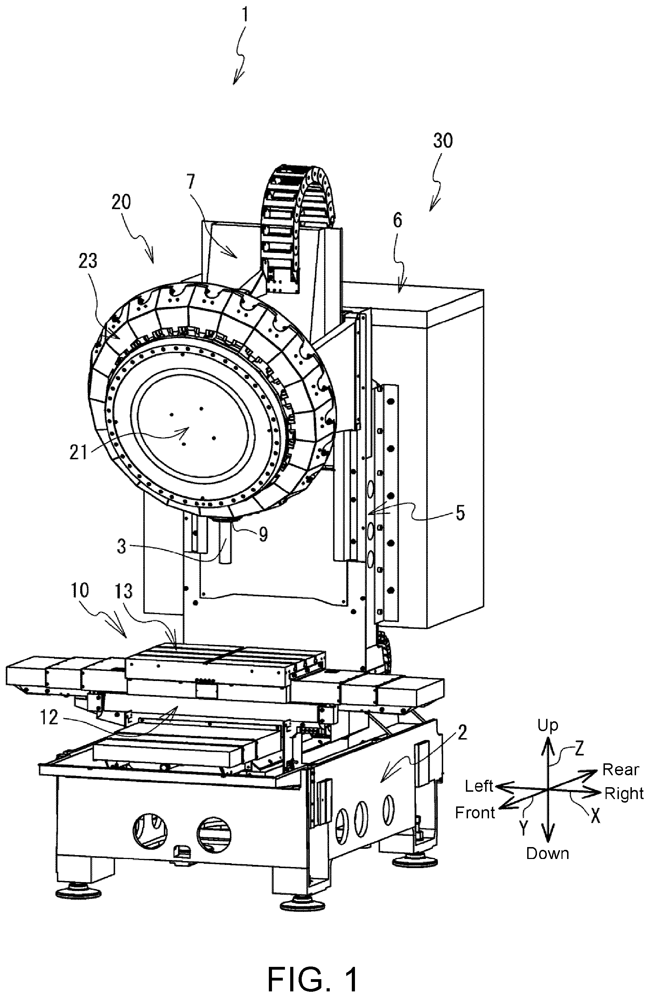

An embodiment of the present disclosure will be described with reference to the drawings. The following description uses left and right, front and rear, and up and down indicated by arrows in the drawings. The left-right direction, the front-rear direction, and the up-down direction of a machine tool 1 are an X-axis direction, a Y-axis direction, and a Z-axis direction of the machine tool 1, respectively. The right direction, forward direction, and upward direction are each a positive direction, and the left direction, rearward direction, and downward direction are each a negative direction. The machine tool 1 shown in FIG. 1 is a machine that performs cutting on a workpiece (not shown) with a tool 3. A numerical control device 30 controls an operation of the machine tool 1. The term "ATC" as mentioned in the present embodiment is an abbreviation for "automatic tool changer", and the term "NC" as mentioned in the present embodiment is an abbreviation for "numerical control".

<Structure of Machine Tool 1>

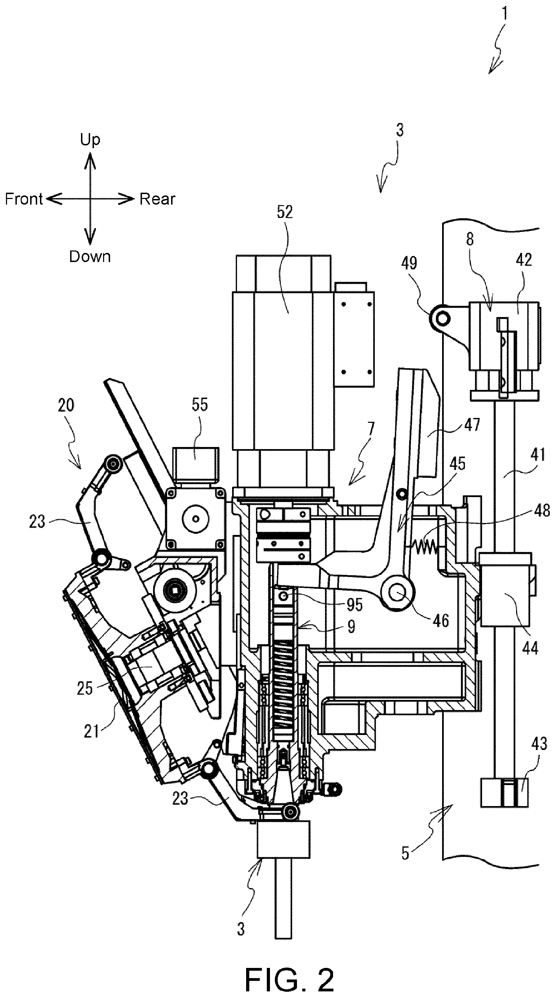

As shown in FIG. 1 and FIG. 2, the machine tool 1 includes a base 2, a column 5, a control box 6, a table device 10, a main shaft head 7, a main shaft 9, and a tool changer 20. The base 2 is a metal foundation of a substantially rectangular parallelepiped shape. The column 5 is fixed to a rear part of an upper surface of the base 2. The column 5 is a pillar extending in the up-down direction. The control box 6 is fixed to a back surface of the column 5. The control box 6 houses the numerical control device 30.

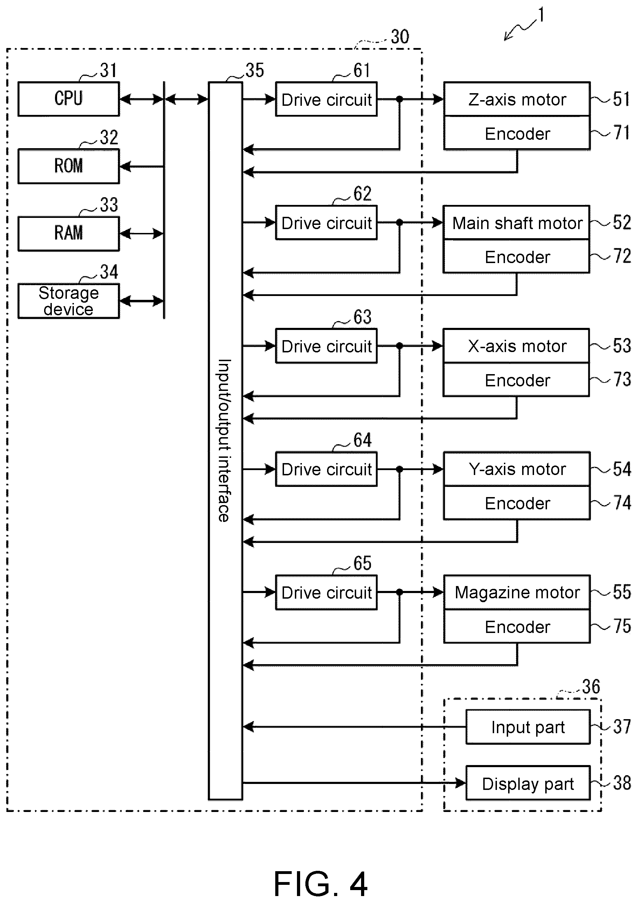

The table device 10 includes a Y-axis movement mechanism (not shown), a Y-axis table 12, a table 13, and an X-axis movement mechanism (not shown). The Y-axis movement mechanism is provided on the upper surface of the base 2 and in front of the column 5, and includes a Y-axis motor 54 (refer to FIG. 4). The Y-axis movement mechanism moves the Y-axis table 12 in the Y-axis direction in response to the drive of the Y-axis motor 54. The X-axis movement mechanism is provided on an upper part of the Y-axis table 12 and includes an X-axis motor 53 (refer to FIG. 4). The X-axis movement mechanism moves the table 13 in the X-axis direction in response to the drive of the X-axis motor 53. Hence, the table 13 is movable in the X-axis direction and Y-axis direction above the base 2 by means of the X-axis movement mechanism and the Y-axis movement mechanism.

<Structure of Z-axis Movement Mechanism 8>

As shown in FIG. 2, a Z-axis movement mechanism 8 is provided on a front part of the column 5. The Z-axis movement mechanism 8 includes a ball screw 41, bearings 42 and 43, a cam follower 49, and a Z-axis motor 51 (refer to FIG. 4). The ball screw 41 is provided on the front part of the column 5 and extends in the Z-axis direction. The bearings 42 and 43 are inserted through the ball screw 41 and rotatably support the ball screw 41. The bearing 42 is provided above the bearing 43. The cam follower 49 is provided in front of the bearing 42. The cam follower 49 slides on a cam surface of a plate cam 47 of the main shaft head 7 described later.

The Z-axis motor 51 is fixed above the bearing 42. The ball screw 41 is connected to an output shaft of the Z-axis motor 51 through a coupling (not shown). The ball screw 41 is rotated positively and reversely around an axis extending in the up-down direction by the drive of the Z-axis motor 51. A nut 44 is screwed onto the ball screw 41 between the bearing 42 and the bearing 43. The nut 44 is fixed to a rear end of the main shaft head 7. When the Z-axis motor 51 rotates in the positive direction, the ball screw 41 rotates, and the nut 44 and the main shaft head 7 integrally rise. When the Z-axis motor 51 rotates in the reverse direction, the ball screw 41 rotates reversely, and the nut 44 and the main shaft head 7 integrally lower.

<Internal Structure of Main Shaft Head 7>

As shown in FIG. 2, the main shaft head 7 is provided on the front part of the column 5. The main shaft head 7 is of a box shape. The main shaft head 7 includes a main shaft motor 52, a crank lever 45, a support shaft 46, and a coil spring 48. The main shaft motor 52 is fixed to a front part of an upper surface of the main shaft head 7.

The support shaft 46 is fixed to the inside of a rear part of the main shaft head 7. The support shaft 46 is of a rod shape extending in the left-right direction. The crank lever 45 is provided on an upper part of the main shaft head 7. The crank lever 45 is a plate of a substantially L-shape when viewed from the left side. The support shaft 46 is inserted through a bent portion of the crank lever 45. The crank lever 45 is swingable about the support shaft 46. The crank lever 45 includes the plate cam 47. The cam surface is formed on a back surface of the plate cam 47. The cam surface of the plate cam 47 is able to come into and out of contact with the cam follower 49. The coil spring 48 is provided inside a rear part of the main shaft head 7. The coil spring 48 extends in the front-rear direction. One end of the coil spring 48 is fixed to a back surface of the main shaft head 7. A rear end of the coil spring 48 is fixed to a rear end of the crank lever 45 below the plate cam 47. The coil spring 48 constantly biases the crank lever 45 clockwise when viewed from the right side.

<Internal Structure of Main Shaft 9>

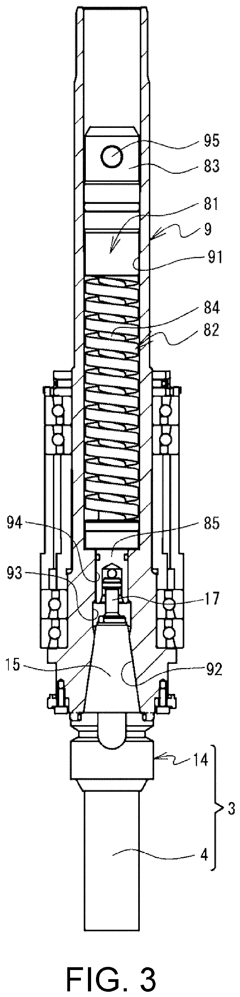

As shown in FIG. 2 and FIG. 3, the main shaft 9 is provided inside a front lower part of the main shaft head 7 and is of a cylindrical shape extending in the up-down direction. The main shaft 9 is supported by the main shaft head 7. The main shaft 9 is rotatably supported around an axis extending in the up-down direction. The main shaft 9 is connected to an output shaft of the main shaft motor 52. The main shaft 9 is rotated positively and reversely around an axis extending in the up-down direction by the drive of the main shaft motor 52.

The main shaft 9 includes a shaft hole 91, a mounting hole 92, a space 93, a sliding hole 94, a clamp shaft 81, and a spring 82. The shaft hole 91 is formed across from an upper end to a lower part of the main shaft 9 and passes through the center of the main shaft 9. The mounting hole 92 is formed at a lower end of the main shaft 9. The tool 3 is mounted in the mounting hole 92. The space 93 is formed in communication with an upper part of the mounting hole 92. The sliding hole 94 is formed to communicate between the shaft hole 91 and the space 93.

The clamp shaft 81 is provided inside the shaft hole 91 and is movable in the up-down direction with respect to the shaft hole 91. The clamp shaft 81 includes a support 83, a shaft 84, and a gripper 85. The support 83 is provided at an upper end of the clamp shaft 81 and is of a columnar shape. The support 83 supports a pin 95. The pin 95 is provided protruding from the clamp shaft 81. The pin 95 is able to come into and out of contact with a front end of the crank lever 45 located above the pin 95.

The shaft 84 is of a columnar shape extending downward from the support 83. The gripper 85 is provided at a lower end of the shaft 84 and includes multiple steel balls (not shown). The spring 82 is provided inserted inside the shaft hole 91. An upper end of the spring 82 engages with the support 83. The spring 82 constantly biases the clamp shaft 81 upward.

The main shaft 9 is capable of mounting the tool 3. The tool 3 includes a holder 14 and a cutting tool 4. One end of the holder 14 holds the cutting tool 4, and the other end of the holder 14 includes a mounting part 15 and a pull stud 17. The mounting part 15 is of a conical shape reducing in diameter toward the other end of the holder 14. The pull stud 17 protrudes from a top part of the mounting part 15 toward the other end of the holder 14. The mounting part 15 is mounted in the mounting hole 92.

When the clamp shaft 81 moves downward against elastic force of the spring 82, the gripper 85 exits from the sliding hole 94 into the space 93. The gripper 85 releases its grip on the pull stud 17 of the holder 14. When the clamp shaft 81 moves upward due to the elastic force of the spring 82 from the state of having moved down, the gripper 85 moves from the space 93 into the sliding hole 94. The gripper 85 grips the pull stud 17 with multiple steel balls.

<Structure of Tool Changer 20>

As shown in FIG. 2, the tool changer 20 is provided in front of the main shaft head 7. The tool changer 20 is of a turret type. The tool changer 20 includes a tool magazine 21, multiple grip arms 23, and a magazine motor 55. The tool magazine 21 is of a substantially disk shape. The tool magazine 21 is rotatably supported about a support shaft 25 extending forward and downward. Each of the grip arms 23 is provided at predetermined intervals on an outer circumference of the tool magazine 21. The multiple grip arms 23 are swingably provided in the front-rear direction of the tool magazine 21. A tip of the grip arm 23 detachably grips the holder 14 of the tool 3. An output shaft of the magazine motor 55 is connected to the support shaft 25. The tool magazine 21 is rotated positively and reversely about the support shaft 25 by the drive of the magazine motor 55.

<Operations of Mounting, Detaching, and Replacing Tool 3>

As shown in FIG. 2, with the mounting part 15 of the holder 14 mounted in the mounting hole 92, based on a control command from the numerical control device 30, the Z-axis motor 51 rotates in the positive direction. The ball screw 41 rotates around its axis, and the main shaft head 7 and the main shaft 9 rise from a machining origin of the table 13. The machining origin is a mechanical origin and is an uppermost position where the workpiece can be machined.

When the main shaft head 7 and the main shaft 9 rise, the cam follower 49 contacts the plate cam 47 of the crank lever 45 and slides along the cam surface of the plate cam 47. The crank lever 45 rotates counterclockwise about the support shaft 46 when viewed from the right side, against the elastic force of the coil spring 48. The front end of the crank lever 45 engages with the pin 95 from above and presses the clamp shaft 81 downward. The clamp shaft 81 biases the gripper 85 downward against the elastic force of the spring 82. The gripper 85 releases its grip on the pull stud 17.

The main shaft 9 further rises to an ATC origin. The ATC origin is a position of the main shaft 9 and is located above the machining origin. In the case where the main shaft 9 is located at the ATC origin, the tool magazine 21 is rotatable.

When the main shaft 9 rises, the tool 3 detaches from the mounting hole 92 of the main shaft 9. The tool 3 that has detached from the main shaft 9 is referred to as first tool. Among the multiple grip arms 23 of the tool changer 20, one grip arm 23 (hereinafter referred to as first grip arm) at a tool change position grips the first tool that has detached from the main shaft 9. The tool change position is a lowermost position of the tool magazine 21 and is a position facing and close to the main shaft 9.

When the main shaft head 7 reaches the ATC origin, based on the control command from the numerical control device 30, the tool changer 20 rotates the tool magazine 21 by the drive of the magazine motor 55. The tool changer 20 indexes the tool 3 (hereinafter referred to as second tool) that holds the cutting tool 4 designated by a control command of an NC program to the tool change position. At this time, the tool magazine 21 rotates from a state in which the first tool is at the tool change position to a state in which the second tool is at the tool change position. The tool magazine 21 rotates in a state in which the first tool is gripped by the first grip arm and the second tool is gripped by another grip arm 23 (hereinafter referred to as second grip arm). The second tool indexed to the tool change position is located below the main shaft head 7 that has moved to the ATC origin.

Next, based on the control command from the numerical control device 30, the Z-axis motor 51 rotates in the reverse direction. The ball screw 41 rotates reversely around its axis, and the main shaft 9 is lowered from the ATC origin. The mounting part 15 of the second tool enters the mounting hole 92 of the main shaft 9.

With the mounting part 15 inserted into the mounting hole 92, the main shaft 9 and the main shaft head 7 further lower. The cam follower 49 slides along the cam surface of the plate cam 47 and then separates from the plate cam 47. Due to the elastic force of the coil spring 48, the crank lever 45 rotates clockwise about the support shaft 46 when viewed from the right side. The front end of the crank lever 45 separates from the pin 95, releasing the downward pressing on the clamp shaft 81. The clamp shaft 81 releases the downward bias on the gripper 85. The gripper 85 moves from the space 93 to the sliding hole 94. The gripper 85 grips and pulls up the pull stud 17 of the second tool with multiple steel balls. The second grip arm of the tool changer 20 releases its grip on the holder 14 of the second tool. The mounting of the mounting part 15 into the mounting hole 92 of the main shaft 9 is completed, and the mounting of the second tool to the main shaft 9 is completed. An operation of the clamp shaft 81 and the crank lever 45 when the tool 3 is mounted to the main shaft 9 is referred to as a mounting operation. An operation of the clamp shaft 81 and the crank lever 45 when the tool 3 is detached from the main shaft 9 is referred to as a detachment operation. The main shaft head 7, the crank lever 45 or the like that are driven by rotation of the Z-axis motor 51 in the mounting operation are referred to as a mounting mechanism.

<Electrical Configuration of Numerical Control Device 30 and Machine Tool 1>

As shown in FIG. 4, the numerical control device 30 includes a CPU 31, a ROM 32, a RAM 33, a storage device 34, an input/output interface 35, and drive circuits 61 to 65. The CPU 31 performs integrated control of the numerical control device 30. The ROM 32 stores various programs. The RAM 33 stores various data during execution of processing.

The storage device 34 is a non-volatile memory and stores the NC program, a condition table 59 described later, and the like. The NC program consists of multiple blocks. Each block includes at least one command such as a tool change command. For each tool 3, the storage device 34 stores the number of times of mounting (equivalent to the number of uses) the tool 3 on the main shaft 9. In the case where the mounting operation of the tool 3 with respect to the main shaft 9 is performed, the CPU 31 adds 1 to the number of times of mounting corresponding to the tool 3 (second tool) on which the mounting operation is performed. In the case where the tool 3 mounted on the main shaft 9 is detached and is replaced with a different tool 3, the CPU 31 sets the number of times of mounting corresponding to the detached tool 3 to 0.

The input/output interface 35 is electrically connected to the drive circuits 61 to 65, encoders 71 to 75, an input part 37, and a display part 38, and performs input and output of various signals. The input part 37 and the display part 38 are provided on an operation panel 36 of the machine tool 1. The operation panel 36 is provided on an outer wall of a cover (not shown) that covers the machine tool 1. The input part 37 accepts input of various information, operation instructions or the like, and inputs them to the CPU 31 via the input/output interface 35. Based on commands input from the CPU 31 via the input/output interface 35, the display part 38 displays various screens, abnormality information, and the like.

The drive circuit 61 is electrically connected to the Z-axis motor 51. The drive circuit 62 is electrically connected to the main shaft motor 52. The drive circuit 63 is electrically connected to the X-axis motor 53. The drive circuit 64 is electrically connected to the Y-axis motor 54. The drive circuit 65 is electrically connected to the magazine motor 55. Based on commands input from the CPU 31 via the input/output interface 35, the drive circuits 61, 62, 63, 64, and 65 output drive currents to the Z-axis motor 51, the main shaft motor 52, the X-axis motor 53, the Y-axis motor 54, and the magazine motor 55, respectively. The Z-axis motor 51, the main shaft motor 52, the X-axis motor 53, the Y-axis motor 54, and the magazine motor 55 are servo motors that rotate according to the input drive currents. The drive circuits 61, 62, 63, 64, and 65 output the drive currents as return values to the input/output interface 35.

The Z-axis motor 51 includes an encoder 71. The main shaft motor 52 includes an encoder 72. The X-axis motor 53 includes an encoder 73. The Y-axis motor 54 includes an encoder 74. The magazine motor 55 includes an encoder 75. The encoders 71, 72, 73, 74, and 75 are absolute value encoders, and detect rotation angles of the Z-axis motor 51, the main shaft motor 52, the X-axis motor 53, the Y-axis motor 54, and the magazine motor 55, respectively. The encoders 71, 72, 73, 74, and 75 input the detected rotation angles to the input/output interface 35. By acquiring the rotation angle of the Z-axis motor 51 detected by the encoder 71, the CPU 31 estimates a rotation angle of the ball screw 41 connected to the Z-axis motor 51, and estimates a position of the main shaft 9 in the Z-axis direction that moves due to rotation of the ball screw 41.

<Disturbance Force in Mounting Operation and Variation in Differential Value of Disturbance Force>

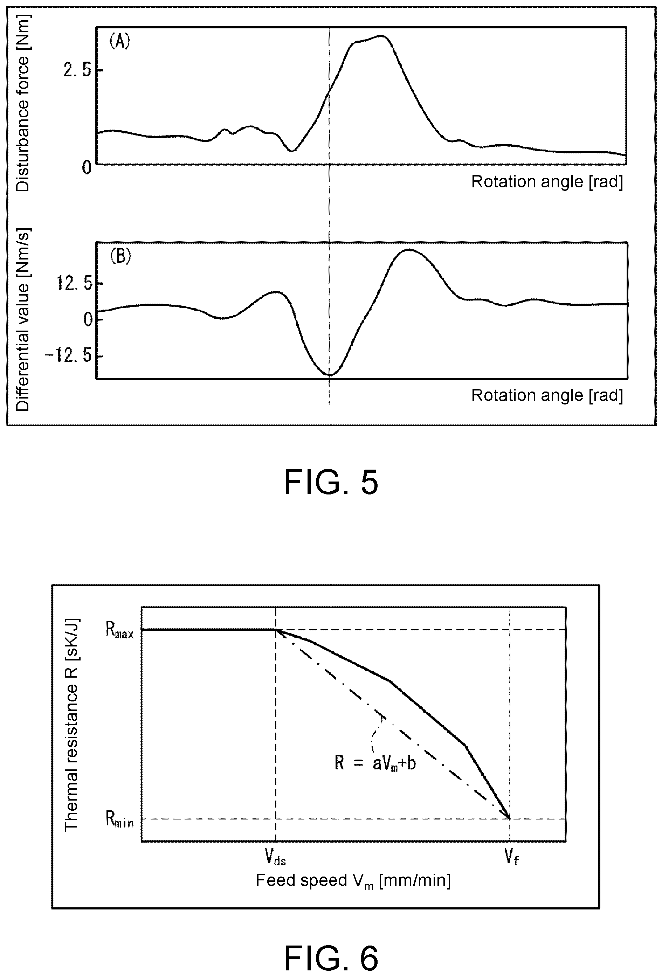

FIG. 5(A) is a graph showing a relationship between the rotation angle of the Z-axis motor 51 (horizontal axis) and disturbance force applied to the Z-axis motor 51 (vertical axis) in the mounting operation. In FIG. 5(A), to eliminate the influence of vibration of the machine tool 1 or the like, low-pass filter processing that removes natural vibration of the machine tool 1 is applied. In the mounting operation, the rotation angle of the Z-axis motor 51 changes in the negative direction.

The disturbance force applied to the Z-axis motor 51 is a force acting on the Z-axis motor 51 as a reaction force to the drive of the Z-axis motor 51. The disturbance force is included in a torque of the Z-axis motor 51 and satisfies a relationship in the following Expression 1.

[Expression 1]

$$T_m = F + J\ddot{\theta} + D\dot{\theta} + k\theta$$

In Expression 1, $T_m$ represents the torque (Nm) of the Z-axis motor 51. F represents the disturbance force (Nm) applied to the Z-axis motor 51. $\theta$ represents the rotation angle (rad) of the Z-axis motor 51. "$\theta$ (with one dot above)" represents a first-order time differential (angular speed (rad/s)) of the rotation angle $\theta$. "$\theta$ (with two dots above)" represents a second-order time differential (angular acceleration (rad/s$^2$)) of the rotation angle $\theta$. J (kg·m$^2$) represents a moment of inertia related to the Z-axis motor 51. The second term on the right side represents inertial force. D represents a viscosity coefficient (Nm/(rad/s)) related to the Z-axis motor 51. The third term on the right side represents viscous force. k represents a coefficient (Nm) related to Coulomb friction related to the Z-axis motor 51. The fourth term on the right side represents Coulomb friction force. The magnitudes of the moment of inertia J, viscosity coefficient D, and coefficient k depend on a rotor portion (not shown) inside the Z-axis motor 51 that rotates with the operation of the Z-axis motor 51, the ball screw 41, the nut 44 that moves up and down with the operation of the Z-axis motor 51, and the main shaft head 7 or the like. The details thereof are omitted.

The CPU 31 acquires the drive current of the Z-axis motor 51 from the drive circuit 61 and acquires the rotation angle $\theta$ of the Z-axis motor 51 from the encoder 71, thereby acquiring the torque $T_m$ of the Z-axis motor 51. The CPU 31 acquires the disturbance force F based on the torque $T_m$ and rotation angle $\theta$ of the Z-axis motor 51.

The CPU 31 acquires the rotation angle $\theta$ of the Z-axis motor 51 from the encoder 71. The CPU 31 estimates the position of the main shaft 9 in the Z-axis direction based on the acquired rotation angle $\theta$ and the lead of the ball screw 41.

FIG. 5(B) is a graph showing a relationship between the rotation angle $\theta$ of the Z-axis motor 51 (horizontal axis) and a time differential value (hereinafter referred to as differential value f) of the disturbance force F (vertical axis) in the mounting operation. In FIG. 5(B), the rotation angle $\theta$ of the Z-axis motor 51 in the case where the differential value f becomes minimum in the mounting operation is referred to as peak angle $\varphi$. A timing at which the differential value f becomes minimum (that is, rotation angle $\theta$ becomes peak angle $\varphi$) in the mounting operation is a timing at which the plate cam 47 separates from the cam follower 49.

<Mounted state of Tool 3 With Respect to Main Shaft 9>

A state in which the tool 3 is mounted on the main shaft 9 in a manner that allows machining of the workpiece with the tool 3 and does not affect cutting accuracy is referred to as a completely mounted state. In contrast, in the case where the machine tool 1 performs cutting in a state (hereinafter referred to as incompletely mounted state) in which the tool 3 is incompletely mounted on the main shaft 9, there is a possibility that the cutting accuracy may decrease. The incompletely mounted state is a state in which the tool 3 is mounted on the main shaft 9 while foreign matter (for example, chips generated in cutting) remains adhering between the mounting part 15 and the mounting hole 92. In the incompletely mounted state, a position where the gripper 85 pulls up and grips the pull stud 17 in the mounting operation is lower than that in the completely mounted state. The completely mounted state and the incompletely mounted state are collectively referred to as the mounted state.

The position where the gripper 85 grips the pull stud 17 changes depending on the mounted state of the tool 3 on the main shaft 9. Accordingly, a timing at which the plate cam 47 contacts the cam follower 49 in the mounting operation or a timing at which the plate cam 47 detaches from the cam follower 49 in the detachment operation changes according to the mounted state of the tool 3 with respect to the main shaft 9. Hence, the peak angle $\varphi$ changes according to the mounted state. The numerical control device 30 determines the mounted state based on a change in the peak angle $\varphi$ for each mounting operation.

<Determination of Mounted State>

In order to determine the mounted state, the CPU 31 of the numerical control device 30 acquires the rotation angle $\theta$ of the Z-axis motor 51 and the disturbance force F applied to the Z-axis motor 51 in the mounting operation every period $t_m$ (s). In the present embodiment, the period $t_m$ is $t_m$ =0.5 ms, which is a shortest time among control periods in the numerical control device 30.

The CPU 31 applies a low-pass filter to the acquired disturbance force F, and then performs time differentiation and calculates the differential value f. The CPU 31 stores the calculated differential value f and the rotation angle $\theta$ in association with each other in the RAM 33. The CPU 31 decides the peak angle $\varphi$ from a variation (refer to FIG. 5(B)) in the differential value f stored in the RAM 33. Every time the mounting operation is executed, the CPU 31 associates the decided peak angle $\varphi$ with the number of times of mounting the tool 3, and sequentially stores them in the storage device 34.

Every time the peak angle $\varphi$ is stored in the storage device 34, the CPU 31 performs statistical processing on the stored peak angle and calculates a statistical value. More specifically, the CPU 31 decides a target peak angle from the peak angles $\varphi$ stored in the storage device 34. The target peak angle is a peak angle excluding a latest peak angle (hereinafter referred to as first peak angle) and the peak angle $\varphi$ in the case where the incompletely mounted state is reached. The CPU 31 extracts a predetermined number of peak angles $\varphi$ counting from a latest target peak angle (hereinafter referred to as second peak angle) among the target peak angles. The CPU 31 calculates, as statistical values, an average value $\mu$ and a standard deviation $\sigma$ of the extracted predetermined number of peak angles $\varphi$. If the first peak angle (that is, the peak angle $\varphi$ in a latest mounting operation) is greater than the sum $(\mu+6\sigma)$ (hereinafter referred to as determination threshold $\varphi_{max}$) of the average value $\mu$ and 6 times the standard deviation $\sigma$, the CPU 31 determines that the mounted state after the mounting operation is an incompletely mounted state.

<Expansion and Contraction of Ball Screw 41>

The ball screw 41 of the Z-axis movement mechanism 8 that moves the main shaft 9 in the Z-axis direction is heated by heat generated from the Z-axis motor 51 and frictional heat with the nut 44. The ball screw 41 dissipates heat due to a temperature difference with the outside air. Hence, the ball screw 41 changes temperature by being heated from the outside and dissipating heat to the outside. When a temperature change occurs, the ball screw 41 expands and contracts particularly in the Z-axis direction which is a longitudinal direction.

When the ball screw 41 expands and contracts, the timing at which the plate cam 47 separates from the cam follower 49 changes according to an expansion and contraction amount $L_b$ of the ball screw 41. That is, the peak angle $\varphi$ changes according to the expansion and contraction amount $L_b$. In the determination of the mounted state based on the peak angle $\varphi$, it is difficult to distinguish between a variation in the peak angle $\varphi$ due to the expansion and contraction of the ball screw 41 and a variation in the peak angle $\varphi$ due to the incompletely mounted state. Hence, when determining the mounted state of the tool 3 with respect to the main shaft 9, the CPU 31 estimates the expansion and contraction amount $L_b$ of the ball screw 41 in the Z-axis direction and corrects the peak angle $\varphi$ based on the expansion and contraction amount $L_b$.

<Estimation of Expansion and Contraction Amount $L_b$ of Ball Screw 41>

The CPU 31 estimates the expansion and contraction amount $L_b$ (m) of the ball screw 41 in the Z-axis direction using a mathematical model. The CPU 31 calculates a temperature Tb (K) of the ball screw 41 in an estimation period $t_s$ (s). In the present embodiment, $t_s$=30 s. The temperature Tb(i) of the ball screw 41 in the i-th (i is an integer equal to or greater than 1) sampling which is latest is expressed by Expression 2 using the temperature Tb(i-1) (K) of the ball screw 41 in the (i-1)-th sampling and a temperature change $\Delta$Tb (K) of the ball screw 41 from the (i-1)-th to the i-th sampling.

$$[\text{Expression 2}]$$

$$Tb(i)=Tb(i-1)+\Delta Tb$$

In the case where i=1, the temperature Tb(i-1) of the ball screw 41 in the sampling, that is, the initial temperature Tb(0) of the ball screw 41, is assumed to be the same as a temperature Ta (K) of the outside air. For simplification of calculation, it is assumed that Ta=0 (K).

The temperature change $\Delta$Tb is expressed by the following Expression 3.

$$[\text{Expression 3}]$$

$$\Delta Tb=(Q_m+Q_f-Q_{ba})/Hb$$

In Expression 3, $Q_m$ represents the amount of heat (J) added to the ball screw 41 due to the heat generation of the Z-axis motor 51 in the estimation period $t_s$. $Q_f$ represents the amount of heat (J) added to the ball screw 41 due to friction in the estimation period $t_s$. $Q_{ba}$ represents the amount of heat (J) released to the outside air in the estimation period $t_s$. Hb represents a heat capacity (J/K) of the ball screw 41. The heat capacity Hb is calculated based on the specific heat of the ball screw 41 and the mass of the ball screw 41.

The amount of heat $Q_m$ is expressed by the following Expression 4.

$$[\text{Expression 4}]$$

$$Q_m=Pr\times(Lm)^2\times t_s$$

In Expression 4, Pr represents a coefficient (J/Nm$^2$) that expresses the amount of heat added to the ball screw 41 due to the heat generation of the Z-axis motor 51. Lm represents an average load (Nm) applied to the Z-axis motor 51 in the estimation period $t_s$, and is expressed by the following Expression 5.

$$[\text{Expression 5}]$$

$$Lm=\Sigma T/t_s$$

In Expression 5, $\Sigma$T is an integration of an absolute value of the torque of the Z-axis motor 51 in the estimation

period $t_s$ (Nm·s), and is expressed by the following Expression 6.

[Expression 6]

$$\sum T = \sum_0^{t_s}\left(\left|T_m\right| \times t_m\right)$$

The amount of heat $Q_f$ is expressed by the following Expression 7.

[Expression 7]

$$Q_f = Fc \times \Sigma TD$$

In Expression 7, Fc represents a coefficient (J/(Nm·m)) representing the amount of heat applied to the ball screw 41 due to friction. $\Sigma TD$ is an integration of the product of the absolute value of the torque $T_m$ applied to the Z-axis motor 51 and an absolute value of a movement distance of the main shaft 9 in the period $t_m$ in the estimation period $t_s$ (Nm·m), and is expressed by the following Expression 8.

[Expression 8]

$$\sum TD = \sum_0^{t_s}\left(\left|T_m\right| \times \left|\frac{V_m}{60 \times 1000} \times t_m\right|\right)$$

In Expression 8, $V_m$ is a feed speed (mm/min) of the main shaft 9 in the Z-axis direction. $V_m$ is decided based on the rotation angle $\theta$ of the Z-axis motor 51 detected by the encoder 71 and the lead of the ball screw 41.

The amount of heat $Q_{ba}$ is expressed by the following Expression 9.

[Expression 9]

$$Q_{ba} = (Tb - Ta)t_s/Rba$$

In Expression 9, the temperature Ta of the outside air is assumed to be 0 (K) as mentioned above. Rba represents an average thermal resistance (sK/J) in the estimation period $t_s$, and is expressed by the following Expression 10.

[Expression 10]

$$Rba = \Sigma R/t_s$$

In Expression 10, $\Sigma R$ is an integration (s2K/J) of the thermal resistance R (sK/J) of the ball screw 41 calculated in the estimation period $t_s$, and is expressed by the following Expression 11.

[Expression 11]

$$\sum R = \sum_0^{t_s}\left(R \times t_m\right)$$

FIG. 6 is a graph obtained by estimating the thermal resistance R from the ball screw 41 with respect to the air around based on experimental results. The thermal resistance R varies based on the feed speed $V_m$ of the main shaft 9 in the Z-axis direction. More specifically, in the case where the feed speed $V_m$ is less than a predetermined boundary speed $V_{ds}$, the magnitude of the thermal resistance R is almost constant at $R_{max}$. On the other hand, when the feed speed $V_m$ becomes equal to or greater than the boundary speed $V_{ds}$, the thermal resistance R decreases as the feed speed $V_m$ increases. The reason is thought to be that the rotation speed of the ball screw 41 rotated by the drive of the Z-axis motor 51 increases, and turbulence occurs in the air around the ball screw 41. Generally, it is known that when turbulence occurs at an interface between a solid and a fluid, the thermal resistance significantly decreases. At a maximum feed speed $V_m$

(hereinafter referred to as fast forward speed $V_{max}$), the magnitude of the thermal resistance R becomes $R_{min}$. In the present embodiment, the magnitude of the thermal resistance R is approximated as $R_{max}$ in the case where the feed speed $V_m$ is less than the boundary speed $V_{ds}$. In the case where the feed speed $V_m$ is equal to or greater than the boundary speed $V_{ds}$, the thermal resistance R is approximated to change proportionally with a proportionality constant a.

As described above, the thermal resistance R is expressed by the following Expression 12.

[Expression 12]

$$\begin{cases} R=R_{max} & (V_m < V_{ds}) \\ R=aV_m+b & (V_m \geq V_{ds}) \end{cases}$$

In Expression 12, the proportionality constant a is expressed by the following Expression 13, and an intercept b is expressed by the following Expression 14.

[Expression 13]

$$a=(R_{min}-R_{max})/(V_{max}-V_{ds})$$

[Expression 14]

$$b=R_{max}-(R_{min}-R_{max})V_{ds}/(V_{max}-V_{ds})$$

The temperature Tb(i-1) in the (i-1)-th time is known, and if the temperature change $\Delta$Tb is calculated based on Expressions 3 to 14, the temperature Tb(i) can be calculated according to Expression 2. The expansion and contraction amount $L_b$ of the ball screw 41 in the case where the ball screw 41 changes from the initial temperature (assuming Tb(0) =Ta=0 (K)) to the temperature Tb(i) is estimated according to the following Expression 15.

[Expression 15]

$$L_b=\alpha \times Tb(i)$$

In Expression 15, $\alpha$ is an expansion coefficient ($\mu$m/K) of the ball screw 41, and is calculated as the product of a linear expansion coefficient (1/K) of the ball screw 41 and an effective length (m) of the ball screw 41. The effective length of the ball screw 41 is a distance in the Z-axis direction between the bearing 43 (refer to FIG. 2) and the ATC origin.

<Estimation of Parameter Necessary for Estimating Expansion and Contraction Amount $L_b$>

To estimate the expansion and contraction amount $L_b$ of the ball screw 41 according to Expression 15, the numerical control device 30 estimates a parameter necessary for estimating the expansion and contraction amount $L_b$. Here, the parameters to be estimated include the coefficients Pr and Fc, the thermal resistances $R_{max}$ and $R_{min}$, and the boundary speed $V_{ds}$.

To estimate the parameters, the numerical control device 30 specifies the expansion and contraction amount $L_b$ by performing a tool change multiple times. More in detail, by acquiring the disturbance force F (refer to FIG. 5(A)) that varies according to the rotation angle $\theta$ for each execution of the mounting operation in the tool change, the numerical control device 30 calculates the differential value f (refer to FIG. 5(B)) and decides the peak angle $\varphi$.

The numerical control device 30 calculates a difference $\rho$ between the peak angle $\varphi$ decided in a latest tool change and the peak angle $\varphi$ (hereinafter referred to as reference peak angle $\varphi_b$) as a reference. In the present embodiment, the reference peak angle $\varphi_b$ is the peak angle $\varphi$ decided in the first tool change in the parameter estimation.

From the peak angle $\varphi$, the position of the main shaft 9 at the timing at which the plate cam 47 separates from the cam follower 49 is estimated. $\varphi_b$ indicates the position of the main shaft 9 at the timing at which the plate cam 47 separates from the cam follower 49 in the mounting operation performed for the first time. $\varphi$ indicates the position of the main shaft 9 at the timing at which the plate cam 47 separates from the cam follower 49 in the latest mounting operation. That is, the difference $\rho$ indicates a change amount from the position of the main shaft 9 at the first time to the position of the main shaft 9 at the latest time at the same timing. The numerical control device 30 calculates a change amount in the position of the main shaft 9 in the Z-axis direction based on the difference $\rho$ ($=\varphi-\varphi_b$) of the peak angle $\varphi$, and specifies this change amount as the expansion and contraction amount $L_b$ of the ball screw 41 in the Z-axis direction.

By this specification method, the expansion and contraction amount $L_b$ in a tool change can be specified. This specification method is on the premise that the tool change is normally performed. For example, in workpiece machining, there is a possibility that the tool change may not be normally performed due to effects such as chips becoming caught between the main shaft 9 and the tool 3. Thus, the expansion and contraction amount $L_b$ cannot be specified by this specification method. Hence, it is necessary to estimate the expansion and contraction amount $L_b$ using Expression 15.

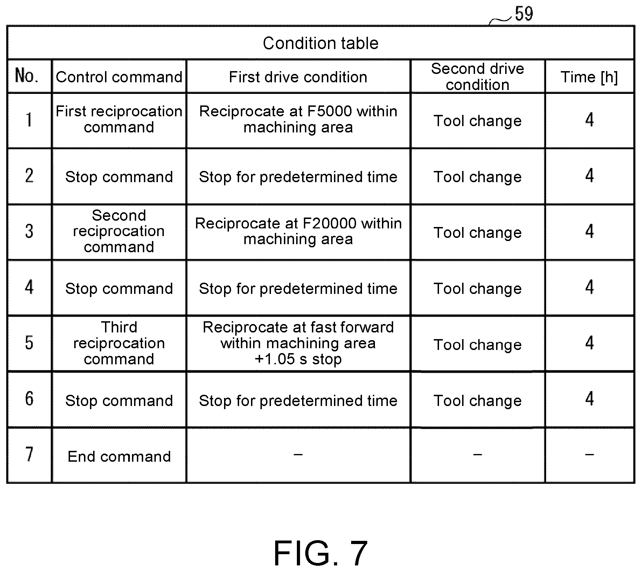

During parameter estimation, the numerical control device 30 performs control based on the condition table 59 shown in FIG. 7. The condition table 59 includes seven blocks. The condition table 59 defines a control command for each block. The numerical control device 30 executes the control commands in order from block No. 1. That is, the block No. indicates the processing order of each block. The control commands include a first reciprocation command, a second reciprocation command, a third reciprocation command, a stop command, an end command, and so on.

The control command is associated with a first drive condition of the Z-axis motor 51, a second drive condition of the Z-axis motor 51, and a time during which the control command is continuously executed. In each control command, the numerical control device 30 drives the Z-axis motor 51 under the first drive condition for a predetermined time (for example, 5 minutes), and when the predetermined time elapses, drives the Z-axis motor 51 under the second drive condition, and again drives the Z-axis motor 51 under the first drive condition for the predetermined time. The numerical control device 30 drives the Z-axis motor 51 under the first drive condition and the second drive condition for a time (4 hours) indicated by the control command.

In the first reciprocation command, based on the first drive condition, the numerical control device 30 drives the Z-axis motor 51 to reciprocate the main shaft 9 at a feed speed F5000 ($V_m$=5000 mm/min) in the Z-axis direction within a machining area for the predetermined time. The machining area is an area lower than the machining origin and is an area where the main shaft 9 moves during workpiece machining by the machine tool 1. The descriptions of the second reciprocation command and the third reciprocation command are omitted. In the stop command, based on the first drive condition, the numerical control device 30 stops the Z-axis motor 51 to stop the main shaft 9 at the machining origin for the predetermined time.

In the first reciprocation command, second reciprocation command, third reciprocation command, and stop command (block Nos. 1 to 6), the numerical control device 30 drives the Z-axis motor 51 to execute a tool change as the second drive condition. The numerical control device 30 decides the peak angle $\varphi$ and specifies the expansion and contraction amount $L_b$ in the mounting operation of the tool 3. That is, in block Nos. 1 to 6, the expansion and contraction amount $L_b$ is specified every predetermined time. The end command (block No. 7) is a command for ending the parameter estimation.

<Parameter Estimation Processing>

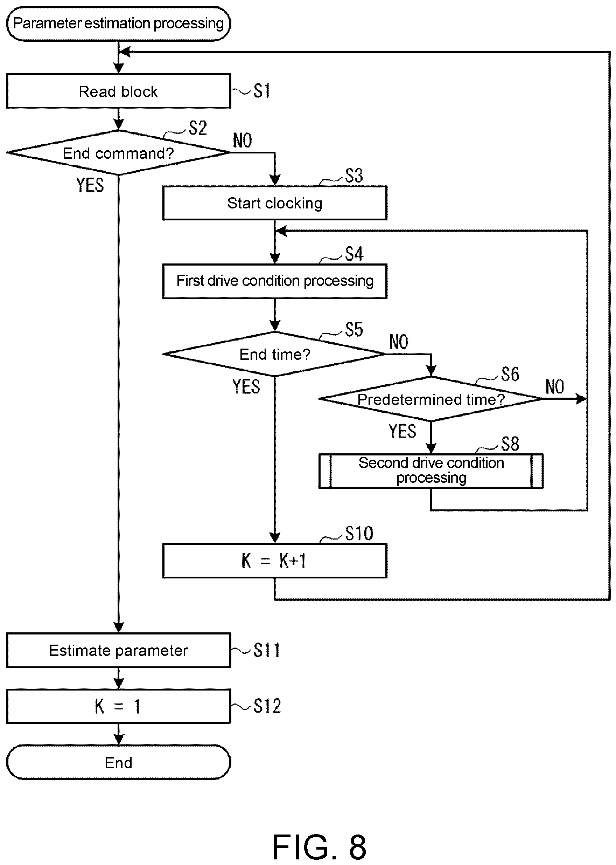

Referring to FIG. 8, the parameter estimation processing executed by the CPU 31 of the numerical control device 30 is described. In the parameter estimation processing, the CPU 31 estimates a parameter necessary for estimating the expansion and contraction amount $L_b$.

An operator inputs a parameter estimation command to the input part 37. The input part 37 accepts the input parameter estimation command and inputs it to the CPU 31. In the case where the parameter estimation command is input, the CPU 31 reads out and executes a control program stored in the ROM 32, thereby starting the parameter estimation processing.

At the start of the parameter estimation processing, the main shaft 9 is located at the machining origin. A variable K that may be used in the parameter estimation processing is an integer equal to or greater than 1, and indicates a block No. in the condition table 59 (refer to FIG. 7). The variable K is stored in the RAM 33 and has a value of 1 when the parameter estimation processing is started.

The CPU 31 reads one block from the condition table 59 (S1). The CPU 31 determines whether a control command of the read block is an end command (S2). If the control command of the read block is not the end command (S2: NO), the CPU 31 starts clocking (S3). The CPU 31 executes first drive condition processing in the control command of the read block (S4). In S4, the CPU 31 drives the Z-axis motor 51 based on a first drive condition of the control command.

The CPU 31 determines whether a time (4 hours) indicated by the control command has elapsed since the start of the clocking in S3 (S5). If it is determined that the time indicated by the control command has not elapsed (S5: NO), the CPU 31 determines whether a predetermined time (5 minutes) has elapsed since the start of the first drive condition processing (S6). If it is determined that the predetermined time has not elapsed since the start of the first drive condition processing (S6: NO), the CPU 31 returns the processing to S4.

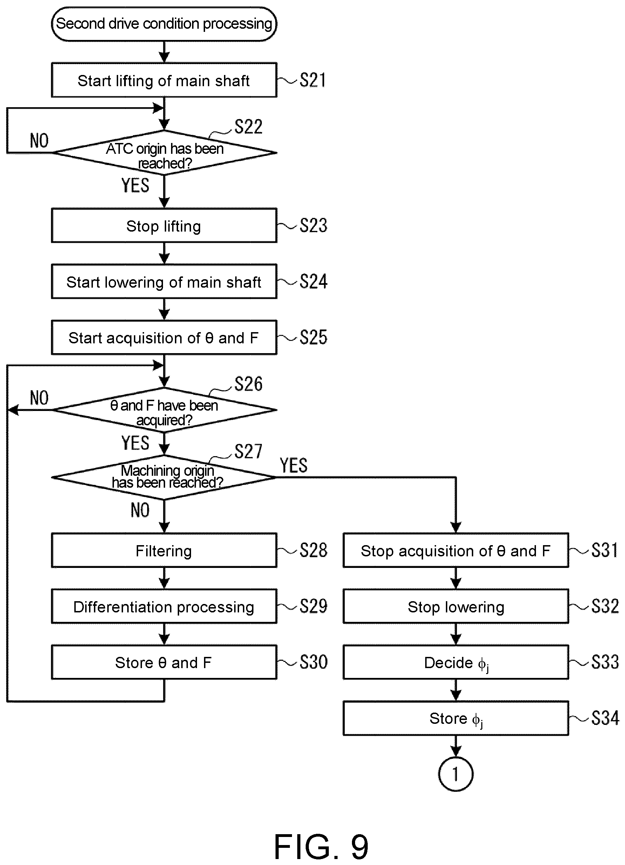

If it is determined that the predetermined time has elapsed since the start of the first drive condition processing (S6: YES), the CPU 31 executes second drive condition processing (refer to FIG. 9; described later) (S8). In the second drive condition processing described later, the numerical control device 30 executes a tool change and specifies the expansion and contraction amount $L_b$. After the second drive condition processing is ended, the CPU 31 returns the processing to S4.

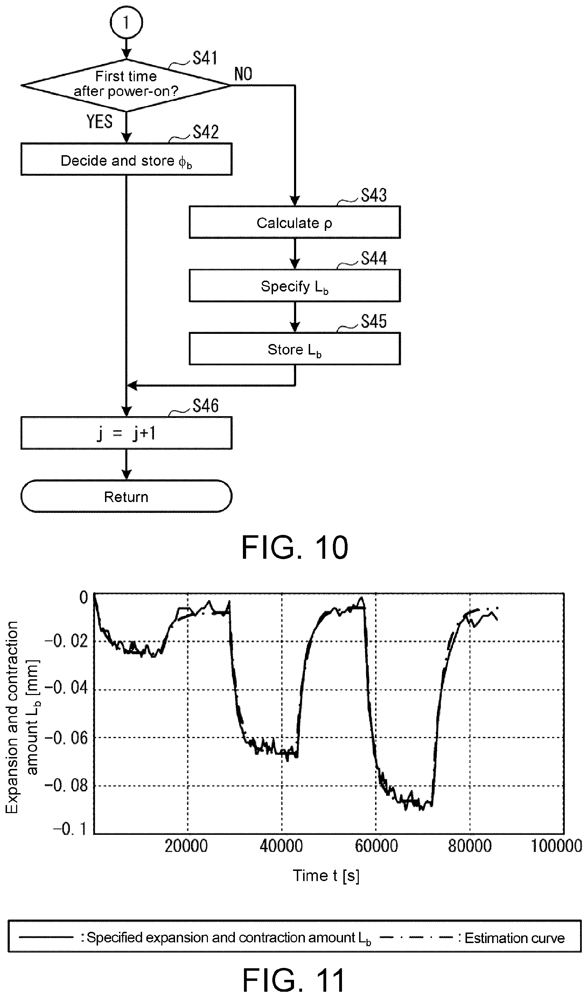

Referring to FIG. 9 and FIG. 10, the second drive condition processing (S8; refer to FIG. 8) executed in the parameter estimation processing is described. A variable j that may be used in the second drive condition processing is an integer equal to or greater than 1, and indicates the number of times the tool change has been executed. The variable j is stored in the RAM 33, and has a value set to 1 after the machine tool 1 is powered on.

The CPU 31 rotates the Z-axis motor 51 in a positive direction and starts lifting of the main shaft 9 (S21). The CPU 31 determines whether the main shaft 9 has reached the ATC origin based on the rotation angle $\theta$ of the Z-axis motor 51 detected by the encoder 71 (S22).

If it is determined that the main shaft 9 has not reached the ATC origin (S22: NO), the CPU 31 returns the processing to S22. If it is determined that the main shaft 9 has reached the ATC origin (S22: YES), the CPU 31 stops the rotation of the Z-axis motor 51 and stops the lifting of the main shaft 9 (S23).

The CPU 31 rotates the Z-axis motor 51 in a reverse direction and starts lowering of the main shaft 9 (S24). The CPU 31 starts acquisition of the rotation angle $\theta$ of the Z-axis motor 51 and the disturbance force F (S25). After executing the processing of S25, the CPU 31 acquires the rotation angle $\theta$ of the Z-axis motor 51 and the disturbance force F in the period $t_m$ (=0.5 ms).

The CPU 31 determines whether the rotation angle $\theta$ of the Z-axis motor 51 and the disturbance force F have been newly acquired in the processing of S25 (S26). If it is determined that the rotation angle $\theta$ and the disturbance force F have not been newly acquired (S26: NO), the CPU 31 returns the processing to S26. If it is determined that the rotation angle $\theta$ and the disturbance force F have been newly acquired in the processing of S25 (S26: YES), the CPU 31 determines whether the main shaft 9 has reached the machining origin based on the acquired rotation angle $\theta$ (S27).

If it is determined that the main shaft 9 has not reached the machining origin (S27: NO), the CPU 31 applies low-pass filter processing to the rotation angle $\theta$ and the disturbance force F acquired in the processing of S25 (S28).

The CPU 31 performs time differentiation on the disturbance force F and calculates the differential value f (S29). The CPU 31 stores the rotation angle $\theta$ and the differential value f in association with each other in the RAM 33 (S30). The CPU 31 returns the processing to S26.

If it is determined that the main shaft 9 has reached the machining origin (S27: YES), the CPU 31 stops the acquisition of the rotation angle $\theta$ of the Z-axis motor 51 and the disturbance force F started in the processing of S25 (S31). The CPU 31 stops the rotation of the Z-axis motor 51 and stops the lowering of the main shaft 9 (S32).

The CPU 31 decides, as a peak angle $\varphi_j$, the rotation angle $\theta$ corresponding to a minimum differential value f among the differential values f stored in the RAM 33 (S33). The CPU 31 stores the peak angle $\varphi_j$ in the RAM 33 (S34). The CPU 31 transitions the processing to S41 (refer to FIG. 10).

As shown in FIG. 10, in the processing of S41, based on the value of the variable j stored in the RAM 33, the CPU 31 determines whether tool change processing being executed is the first processing after the machine tool 1 is powered on (S41).

If the value of the variable j is 1 and it is determined that the tool change processing being executed is the first processing after the machine tool 1 is powered on (S41: YES), the CPU 31 decides the peak angle $\varphi_j$ decided in S22 as the reference peak angle $\varphi_b$ and stores it in the RAM 33 (S42). The CPU 31 adds 1 to the value of the variable j (S46) and returns the processing to the parameter estimation processing.

If the value of the variable j is 2 or more and it is determined that the tool change processing being executed is not the first processing after the machine tool 1 is powered on (S41: NO), the CPU 31 calculates the difference $\rho$ (=$\varphi_j$-$\varphi_b$) between the peak angle $\varphi_j$ decided in S22 and the reference peak angle $\varphi_b$ decided in S42 (S43).

Based on the difference $\rho$ calculated in the processing of S43, the CPU 31 calculates a change amount in the position of the main shaft 9 at the peak angle $\varphi$, and specifies this change amount as the expansion and contraction amount $L_b$ of the ball screw 41 (S44). The CPU 31 stores the specified expansion and contraction amount $L_b$ and an elapsed time since the start of execution of the parameter estimation processing in association with each other in the storage device 34 (S45). The CPU 31 adds 1 to the value of the variable j (S46) and returns the processing to the parameter estimation processing.

As shown in FIG. 8, if it is determined that the time (4 hours) indicated by the control command has elapsed (S5: YES), the CPU 31 adds 1 to the value of the variable K (S10) and returns the processing to S1.

If the control command of the block read in the processing of S1 is the end command (S2: YES), the CPU 31 estimates a parameter (coefficients Pr and Fc, thermal resistances $R_{max}$ and $R_{min}$, and boundary speed $V_{ds}$) (S11).

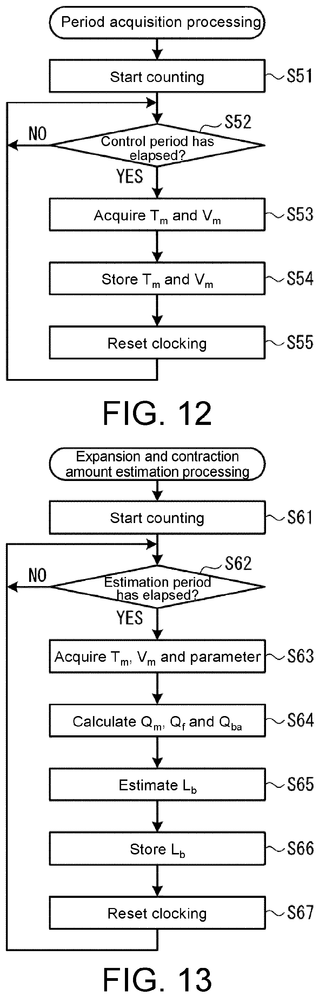

A method for estimating a parameter is described by way of a specific example. For example, when the processing of S11 is started, the expansion and contraction amount $L_b$ of the ball screw 41 that varies according to time as shown in solid lines in FIG. 11 is stored in the storage device 34. In S11, the CPU 31 estimates a parameter using, for example, the steepest descent method, so that the expansion and contraction amount $L_b$ (solid line in FIG. 11) specified in S44 (refer to FIG. 10) approximates the expansion and contraction amount $L_b$ estimated by Expression 15. The torque $T_m$ of the Z-axis motor 51 and the feed speed $V_m$ of the main shaft 9, which are necessary for estimating the expansion and contraction amount $L_b$ in Expression 15, are acquired in period acquisition processing (refer to FIG. 12) described later.

The CPU 31 stores the parameter estimated in the processing of S11 in the storage device 34 (S12). The CPU 31 ends the parameter estimation processing.

<Period Acquisition Processing>

Referring to FIG. 12, the period acquisition processing executed by the CPU 31 of the numerical control device 30 is described. In the period acquisition processing, the CPU 31 acquires the torque $T_m$ of the Z-axis motor 51 and the feed speed $V_m$ of the main shaft 9 that are necessary for estimating the expansion and contraction amount $L_b$ in Expression 15. The torque $T_m$ and the feed speed $V_m$ are lists storing time-series data for each control period. After the machine tool 1 is powered on, the CPU 31 reads out and executes a control program stored in the ROM 32, thereby starting the period estimation processing.

The CPU 31 starts clocking (S51). The CPU 31 determines whether the period $t_m$ (=5 ms) has elapsed since the start of the clocking (S52). If it is determined that the period $t_m$ has not elapsed (S52: NO), the CPU 31 returns the processing to S52.

The CPU 31 acquires the rotation angle $\theta$, the torque $T_m$ of the Z-axis motor 51, and the feed speed $V_m$ of the main shaft 9 (S53). In the processing of S53, the CPU 31 acquires the rotation angle $\theta$ of the Z-axis motor 51 from the encoder 71. By acquiring the rotation angle $\theta$ and acquiring a drive current of the Z-axis motor 51 from the drive circuit 61, the CPU 31 acquires the torque $T_m$. Based on an angular speed ($\theta$ with one dot above) calculated from the rotation angle $\theta$ and the lead of the ball screw 41, the CPU 31 acquires the feed speed $V_m$.

The CPU 31 stores the torque $T_m$ and the feed speed $V_m$ acquired in S51 in the RAM 33 (S54). The CPU 31 resets the clocking and restarts the clocking of the period $t_m$ (S55). The CPU 31 returns the processing to S52. Every time the period $t_m$ elapses, the CPU 31 acquires the torque $T_m$ and the feed speed $V_m$.

Since the parameter (coefficients Pr and Fc, thermal resistances $R_{max}$ and $R_{min}$, and boundary speed $V_{ds}$) is estimated in the parameter estimation processing and the torque $T_m$ of the Z-axis motor 51 and the feed speed $V_m$ are acquired in the period acquisition processing, the numerical control device 30 is able to estimate the expansion and contraction amount $L_b$ of the ball screw 41 based on Expression 15. By executing expansion and contraction amount estimation processing described later, the numerical control device 30 estimates the expansion and contraction amount $L_b$. In the expansion and contraction amount estimation processing, the numerical control device 30 estimates the expansion and contraction amount $L_b$ in the estimation period $t_s$ (30s). The estimation period $t_s$ is set to a longer time relative to the control period (0.5 ms).

<Expansion and Contraction Amount Estimation Processing>

Referring to FIG. 13, the expansion and contraction amount estimation processing executed by the CPU 31 of the numerical control device 30 is described. The operator inputs an expansion and contraction amount estimation command to the input part 37. The input part 37 accepts the input expansion and contraction amount estimation command and inputs it to the CPU 31. In the case where the expansion and contraction amount estimation command is input, the CPU 31 reads out and executes a control program stored in the ROM 32, thereby starting the expansion and contraction amount estimation processing. When the expansion and contraction amount estimation processing is started, the parameter estimated in the parameter estimation processing is stored in the storage device 34.

The CPU 31 starts clocking (S61). The CPU 31 determines whether the estimation period $t_s$ (=30 s) has elapsed since the start of the clocking (S62). If it is determined that the estimation period $t_s$ has not elapsed (S62: NO), the CPU 31 returns the processing to S62.

If it is determined that the estimation period $t_s$ has elapsed (S62: YES), the CPU 31 acquires, as information about the Z-axis motor 51, the torque $T_m$ of the Z-axis motor 51 and the feed speed $V_m$ of the main shaft 9 that are stored in the RAM 33 in S54 (refer to FIG. 11), as well as the parameter estimated in S11 (refer to FIG. 8) (S63). Based on the torque $T_m$, feed speed $V_m$, and parameter acquired in S63, as well as Expressions 4, 7, and 9, the CPU 31 calculates the amounts of heat $Q_m$, $Q_f$, and $Q_{ba}$ (S64).

Based on the amounts of heat $Q_m$, $Q_f$, and $Q_{ba}$ calculated in the processing of S64, as well as Expression 15, the CPU 31 estimates the expansion and contraction amount $L_b$ of the ball screw 41 (S65). The CPU 31 stores the expansion and contraction amount $L_b$ estimated in the processing of S65 in the RAM 33 (S66). The CPU 31 resets the clocking and restarts the clocking of the estimation period $t_s$ (S67). The CPU 31 returns the processing to S62. Every time the estimation period $t_s$ elapses, the CPU 31 estimates the expansion and contraction amount $L_b$.

As mentioned above, the peak angle $\varphi$ changes according to the mounted state. The numerical control device 30 determines the mounted state based on a change in peak angle $\varphi$ for each mounting operation. In the tool change processing described later, the numerical control device 30 corrects the peak angle $\varphi$ based on the estimated expansion and contraction amount $L_b$ and determines the mounted state.

<Tool Change Processing>

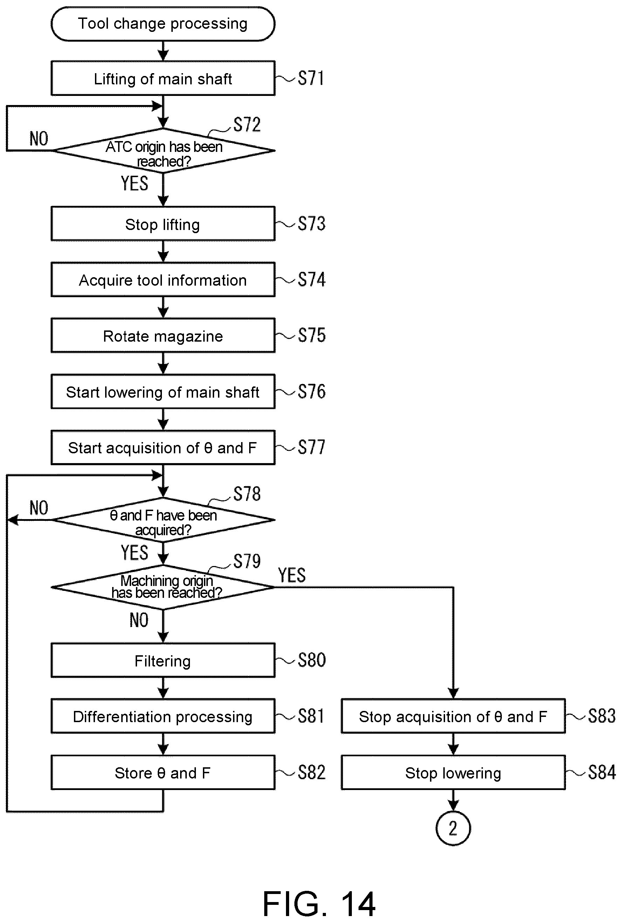

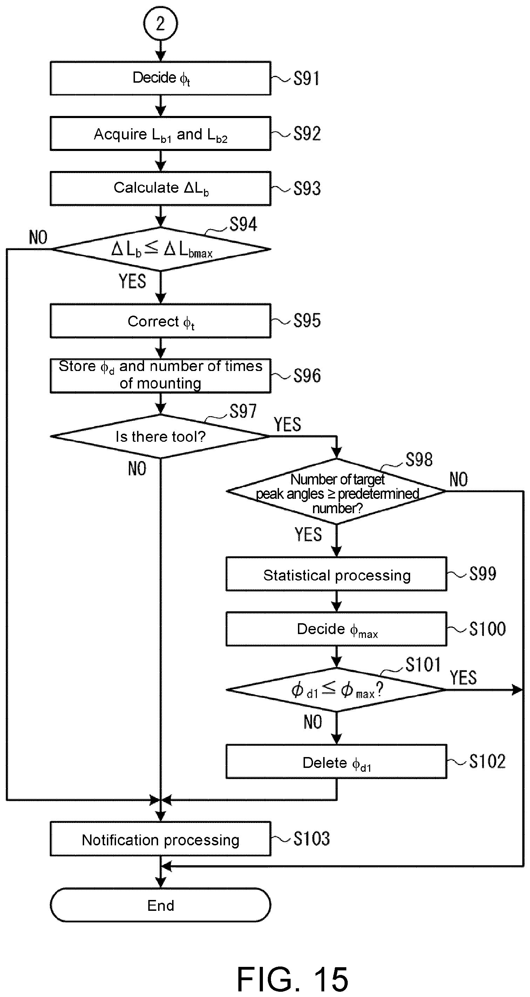

Referring to FIG. 14 and FIG. 15, the tool change command executed by the CPU 31 of the numerical control device 30 is described. In the tool change command, the CPU 31 performs a change of the tool 3 by the tool changer 20 and determines the mounted state in the mounting operation. The operator inputs a tool change command to the input part 37. The input part 37 accepts the input tool change command and inputs it to the CPU 31. In the case where the tool change command is input, the CPU 31 reads out and executes a control program stored in the ROM 32, thereby starting the tool change processing.

In the tool change processing, the main shaft 9 is located at the machining origin. A part of the processing in the tool change processing is common with the second drive condition processing (refer to FIG. 9 and FIG. 10). With respect to the processing executed in the tool change processing that is common with the second drive condition processing, the description will be simplified.

As shown in FIG. 14, the CPU 31 starts lifting of the main shaft 9 (S71). The CPU 31 determines whether the main shaft 9 has reached the ATC origin (S72). If it is determined that the main shaft 9 has not reached the ATC origin (S72: NO), the CPU 31 returns the processing to S2. If it is determined that the main shaft 9 has reached the ATC origin (S72: YES), the CPU 31 stops the lifting of the main shaft 9 (S73).

The CPU 31 acquires tool information indicating the tool 3 (second tool) to be mounted on the main shaft 9 by tool change (S74). The tool information includes the number of times of mounting the tool 3. The CPU 31 drives the magazine motor 55 to rotate the tool magazine 21 and index the grip arm 23 that grips the second tool to the tool change position (S75).

The CPU 31 starts lowering of the main shaft 9 (S76). The CPU 31 starts acquisition of the rotation angle $\theta$ of the Z-axis motor 51 and the disturbance force F (S77). In the processing of S77, by acquiring the torque $T_m$ of the Z-axis motor 51 stored in S54 (refer to FIG. 12) of the period acquisition processing, the CPU 31 acquires the disturbance force F included in the torque $T_m$ based on Expression 1.

The CPU 31 determines whether the rotation angle $\theta$ of the Z-axis motor 51 and the disturbance force F have been newly acquired in the processing of S77 (S78). If it is determined that the rotation angle $\theta$ and the disturbance force F have not been newly acquired (S78: NO), the CPU 31 returns the processing to S78. If it is determined that the rotation angle $\theta$ and the disturbance force F have been newly acquired in the processing of S77 (S78: YES), the CPU 31 determines whether the main shaft 9 has reached the machining origin based on the acquired rotation angle $\theta$ (S79).

If it is determined that the main shaft 9 has not reached the machining origin (S79: NO), the CPU 31 applies low-pass filter processing to the rotation angle $\theta$ and the disturbance force F acquired in the processing of S77 (S80).

The CPU 31 performs time differentiation on the disturbance force F and calculates the differential value f (S81). The CPU 31 stores the rotation angle $\theta$ and the differential value f in association with each other in the RAM 33 (S82). The CPU 31 returns the processing to S78.

If it is determined that the main shaft 9 has reached the machining origin (S79: YES), the CPU 31 stops the acquisition of the rotation angle $\theta$ of the Z-axis motor 51 and the disturbance force F started in the processing of S77 (S83). The CPU 31 stops the lowering of the main shaft 9 (S84). The CPU 31 transitions the processing to S91 (refer to FIG. 15).

As shown in FIG. 15, the CPU 31 decides, as a peak angle $\varphi_t$, the rotation angle $\theta$ corresponding to the differential value f indicating the minimum among the differential values f stored in the RAM 33 (S91). The CPU 31 acquires, among the expansion and contraction amounts $L_b$ of the ball screw 41 estimated in the expansion and contraction amount estimation processing and stored in the RAM 33, a latest expansion and contraction amount $L_{b1}$ and an expansion and contraction amount $L_{b2}$ stored immediately before the expansion and contraction amount $L_{b1}$ (S92). The CPU 31 calculates a difference $\Delta L_b$ ($=L_{b1}-L_{b2}$) between the expansion and contraction amount $L_{b1}$ and the expansion and contraction amount $L_{b2}$ (S93).

The CPU 31 determines whether the difference $\Delta L_b$ calculated in S93 is less than or equal to a threshold $\Delta L_{bmax}$ (S94). If the difference $\Delta L_b$ being a change amount in the expansion and contraction amount $L_b$ of the ball screw 41 is greater than the threshold $\Delta L_{bmax}$, since the ball screw 41 significantly expands and contracts during a while from the tool change processing when the expansion and contraction amount $L_{b2}$ is estimated to the tool change processing currently being executed, there is a risk that the position of the main shaft 9 cannot be accurately controlled in the machining of the workpiece performed during this while. If it is determined that the difference $\Delta L_b$ is greater than the threshold $\Delta L_{bmax}$ (S94: NO), the CPU 31 executes notification processing (S103). In the processing of S103, the CPU 31 performs, as the notification processing, an error notification through the display part 38. The CPU 31 ends the tool change processing.

If it is determined that the difference $\Delta L_b$ is less than or equal to the threshold $\Delta L_{bmax}$ (S94: YES), the CPU 31 corrects the peak angle $\varphi_t$ decided in the processing of S91 based on the expansion and contraction amount $L_{b1}$ acquired in the processing of S92, and decides a corrected peak angle $\varphi_d$ (S95). In the processing of S95, by inverting the calculation of the expansion and contraction amount $L_b$ from the difference $\rho$ performed in the processing of S44, the CPU 31 calculates the difference $\rho$ of the peak angle $\varphi$ from the expansion and contraction amount $L_{b1}$ of the ball screw 41. The CPU 31 decides the corrected peak angle $\varphi_d$ by subtracting the calculated difference $\rho$ from the peak angle $\varphi_t$. The CPU 31

stores the corrected peak angle $\varphi_d$ decided in the processing of S95 and the number of times of mounting the tool 3 acquired in the processing of S74 in association with each other in the storage device 34 (S96).

The CPU 31 determines whether there is a tool 3 at the tool change position when the main shaft 9 is lowered (S97). If it is determined that there is no tool 3 at the tool change position (S97: NO), the CPU 31 executes the notification processing (S103) and ends the tool change processing. If it is determined that there is a tool 3 at the tool change position (S97: YES), the CPU 31 transitions the processing to S98.

The CPU 31 determines whether the number of target peak angles (peak angles among the stored corrected peak angles $\varphi_d$, excluding a first peak angle $\varphi_{d1}$ and the peak angle $\varphi_d$ in the case where the incompletely mounted state is reached) among the corrected peak angles $\varphi_d$ stored in the storage device 34 in the processing of S96 is equal to or greater than a predetermined number (S98). If it is determined that the number of target peak angles is less than the predetermined number (S98: NO), the CPU 31 ends the tool change processing.

If it is determined that the number of target peak angles is equal to or greater than the predetermined number (S98: YES), the CPU 31 executes statistical processing (S99). In the processing of S99, based on the number of times of mounting, the CPU 31 acquires the predetermined number of target peak angles in a descending order of newness from a second peak angle among the target peak angles stored in the storage device 34. The CPU 31 calculates the average value $\mu$ and standard deviation $\sigma$ of the acquired target peak angles. Based on the average value $\mu$ and standard deviation $\sigma$ calculated in the processing of S99, the CPU 31 decides $\mu+6\sigma$ as the determination threshold $\varphi_{max}$ (S100).

The CPU 31 determines whether the first peak angle $\varphi_{d1}$ among the peak angles $\varphi_d$ stored in the storage device 34 in the processing of S96 is less than or equal to the determination threshold $\varphi_{max}$ decided in the processing of S100 (S101). If it is determined that the first peak angle $\varphi_{d1}$ is greater than the determination threshold $\varphi_{max}$ (S101: NO), the CPU 31 determines that the mounted state after the mounting operation is an incompletely mounted state. In this case, the CPU 31 deletes the first peak angle $\varphi_{d1}$ stored in the storage device 34 (S102). The CPU 31 executes the notification processing (S103) and ends the tool change processing.

If it is determined that the first peak angle $\varphi_{d1}$ is less than or equal to the determination threshold $\varphi_{max}$ (S101: YES), the CPU 31 determines that the mounted state after the mounting operation is a completely mounted state. In this case, the CPU 31 ends the tool change processing.

<Actions and Effects of Present Embodiment>

As described above, the temperature Tb of the ball screw 41 changes due to heating from the outside and heat dissipation to the outside. When the temperature change $\Delta Tb$ occurs, the ball screw 41 expands and contracts in the Z-axis direction. When the ball screw 41 expands and contracts, the peak angle $\varphi$ changes according to the expansion and contraction amount $L_b$ of the ball screw 41. In the determination of the mounted state based on the peak angle $\varphi$, it is difficult to distinguish between a variation in the peak angle $\varphi$ due to the expansion and contraction of the ball screw 41 and a variation in the peak angle $\varphi$ due to the incompletely mounted state.

The CPU 31 of the numerical control device 30 estimates the expansion and contraction amount $L_b$ of the ball screw 41 (S65). The CPU 31 acquires the disturbance force F of the Z-axis motor 51 (S77). In the processing of S77, by acquiring the torque $T_m$ of the Z-axis motor 51, the CPU 31 acquires the disturbance force F included in the torque $T_m$. Based on the peak angle $\varphi$, which is decided by the expansion and contraction amount $L_b$ of the ball screw 41 estimated in the processing of S65 and a variation in the differential value f being a time differential of the disturbance force F, the CPU 31 determines the mounted state (S101). In this way, the numerical control device 30 estimates the expansion and contraction amount $L_b$ of the ball screw 41. Based on the estimated expansion and contraction amount $L_b$ and the torque $T_m$ of the Z-axis motor 51, the numerical control device 30 determines the mounted state of the tool 3 with respect to the main shaft 9. Since the numerical control device 30 takes into consideration the expansion and contraction amount $L_b$ in the determination of the mounted state, the mounted state can be accurately determined.

The CPU 31 acquires the information (torque $T_m$ of Z-axis motor 51 and feed speed $V_m$ of main shaft 9) about the Z-axis motor 51 (S63). Based on the acquired torque $T_m$ and feed speed $V_m$, the CPU 31 calculates the amounts of heat $Q_m$, $Q_f$, and $Q_{ba}$ (S64). Based on the calculated amounts of heat $Q_m$, $Q_f$, and $Q_{ba}$, as well as Expression 15, the CPU 31 estimates the expansion and contraction amount $L_b$ of the ball screw 41 (S65). The numerical control device 30 acquires the information about the Z-axis motor 51 resulting from heat that enters and exits the ball screw 41, and, by calculating the amounts of heat $Q_m$, $Q_f$, and $Q_{ba}$ based on the acquired information, estimates the expansion and contraction amount $L_b$ of the ball screw 41. Thus, the numerical control device 30 is able to accurately estimate the expansion and contraction amount $L_b$.

The CPU 31 acquires, as the information about the Z-axis motor 51, the torque $T_m$ of the Z-axis motor 51 and the feed speed $V_m$ of the main shaft 9 (S63). By acquiring the angular speed ($\theta$ with one dot above), the CPU 31 acquires the feed speed $V_m$. Based on the acquired torque $T_m$ and feed speed $V_m$, the numerical control device 30 is able to accurately calculate the amounts of heat $Q_m$, $Q_f$, and $Q_{ba}$ that enter and exit the ball screw 41.

The CPU 31 acquires the rotation angle $\theta$ of the Z-axis motor 51 and the disturbance force F (S77). The CPU 31 performs time differentiation on the disturbance force F and calculates the differential value f (S80). The CPU 31 decides, as the peak angle $\varphi_t$, the rotation angle $\theta$ corresponding to the differential value f indicating the minimum among the calculated differential values f (S91). The CPU 31 corrects the decided peak angle $\varphi_t$ based on the expansion and contraction amount $L_{b1}$, and decides the corrected peak angle $\varphi_d$ (S95). By determining whether the first peak angle $\varphi_{d1}$ among the corrected peak angles $\varphi_d$ is less than or equal to the determination threshold $\varphi_{max}$, the CPU 31 determines the mounted state (S101). According to the corrected peak angle $\varphi_d$ obtained by correcting the peak angle $\varphi$ based on the expansion and contraction amount $L_{b1}$ of the ball screw 41, the numerical control device 30 determines the mounted state. Accordingly, since a deviation between the position of the main shaft 9 estimated from the peak angle $\varphi_d$ and the actual position of the main shaft 9 is suppressed, the numerical control device 30 is able to accurately determine the mounted state of the tool 3 with respect to the main shaft 9.

The CPU 31 stores the corrected peak angle $\varphi_d$ and the number of times of mounting the tool 3 in association with each other in the storage device 34 (S96). The CPU 31 acquires a predetermined number of target peak angles stored in the storage device 34 and calculates the average value $\mu$ and standard deviation $\sigma$ of the acquired target peak angles (S99). By determining whether the first peak angle $\varphi_{d1}$ is less than or equal to the determination threshold $\varphi_{max}$ (=$\mu+6\sigma$), the CPU 31 determines the mounted state (S101). The numerical control device 30 determines the mounted state based on the statistical values (average value $\mu$ and standard deviation $\sigma$) on the basis of the predetermined number of target peak angles among the corrected peak angles $\varphi_d$ stored in the storage device 34. Accordingly, the numerical control device 30 is able to eliminate the influence of variations in determining the corrected peak angle $\varphi_d$ and accurately determine the mounted state.

The CPU 31 determines whether the difference $\Delta L_b$ between the expansion and contraction amount $L_{b1}$ and the expansion and contraction amount $L_{b2}$ is less than or equal to the threshold $\Delta L_{bmax}$ (S94). If it is determined that the difference $\Delta L_b$ is less than or equal to the threshold $\Delta L_{bmax}$ (S94: YES), by determining whether the first peak angle $\varphi_{d1}$ is less than or equal to the determination threshold $\varphi_{max}$, the CPU 31 determines the mounted state (S101). If it is determined that the difference $\Delta L_b$ is greater than the threshold $\Delta L_{bmax}$ (S94: NO), the CPU 31 ends the tool change processing without determining the mounted state. If the difference $\Delta L_b$ being the change amount in the expansion and contraction amount $L_b$ of the ball screw 41 is greater than the threshold $\Delta L_{bmax}$, there is a risk that the expansion and contraction amount $L_b$ may not be accurately estimated. In the numerical control device 30, by determining the magnitude of the difference $\Delta L_b$ of the expansion and contraction amount $L_b$, erroneous determination of the mounted state due to inaccurate estimation of the expansion and contraction amount $L_b$ can be suppressed.

In the expansion and contraction amount estimation processing, the CPU 31 estimates the expansion and contraction amount $L_b$ every estimation period $t_s$. Since the estimation period $t_s$ (=30 s) is sufficiently long relative to the control period (=0.5 ms), the numerical control device 30 is able to accurately estimate the expansion and contraction amount $L_b$ with a small amount of calculation.

The CPU 31 repeatedly acquires the torque $T_m$ of the Z-axis motor 51 as well as the feed speed $V_m$ and rotation angle $\theta$ of the main shaft 9 every period $t_m$ (S53). The period $t_m$ is a shortest time among the control periods in the numerical control device 30. The numerical control device 30 acquires the torque $T_m$ every control period, the control period being a smallest unit at which the torque $T_m$ can be acquired. The numerical control device 30 decides the peak angle $\varphi$ based on the disturbance force F included in the acquired torque $T_m$, and determines the mounted state. Since the torque $T_m$ is acquired at intervals of the control period, the numerical control device 30 is able to relatively correctly decide the peak angle $\varphi$ and relatively accurately determine the mounted state.

<Modifications>

The present disclosure can be modified in various ways from the above-described embodiment. The various modifications described hereinafter can be combined with each other as long as no contradictions arise. For example, the numerical control device 30 is not limited to being provided in the machine tool 1, and may be provided separately from the machine tool 1. For example, the numerical control device 30 may be a device (such as a personal computer (PC) or a special purpose machine) connected to the machine tool 1. The tool changer 20 is not limited to being of the turret type, and may be of, for example, an arm type.

The CPU 31 of the numerical control device 30 may acquire the torque $T_m$ of the Z-axis motor 51 stored in the RAM 33 in the processing of S54, instead of the disturbance force F, and decide the peak angle $\varphi$ based on a variation in the torque $T_m$. In this case, the CPU 31 performs time differentiation on the torque $T_m$, similarly to the case of acquiring the disturbance force F. The CPU 31 decides, as the peak angle $\varphi$, the rotation angle $\theta$ corresponding a differential value of the torque $T_m$ indicating the minimum among the differential values of the torque $T_m$. The CPU 31 corrects the decided peak angle $\varphi$ based on the expansion and contraction amount $L_b$, and determines the mounted state. In this way, based on a variation in the torque $T_m$, the numerical control device 30 is able to determine the mounted state.

The CPU 31 of the numerical control device 30 may determine, as a mounted state of the tool 3, a mounted state other than the incompletely mounted state in which the tool 3 is mounted with foreign matter adhering between the mounting part 15 and the mounting hole 92. For example, the CPU 31 may determine a tool deterioration state as the mounted state. The tool deterioration state is, for example, a state in which a connected portion of the pull stud 17 with the mounting part 15 is recessed inward due to repeated mounting of the tool 3. In the tool deterioration state, the position where the gripper 85 pulls up and grips the pull stud 17 in the mounting operation is lower than that in the completely mounted state. Accordingly, in the case where the mounted state is the tool deterioration state, the peak angle $\varphi$ in the case where the differential value f being a time differential of the disturbance force F indicates the minimum varies downward compared to the case where the mounted state is the completely mounted state. For example, by determining whether the first peak angle $\varphi_{d1}$ is equal to or greater than the threshold ($=\mu-6\sigma$) decided in the processing of S100 with $\mu-6\sigma$ as the determination threshold, the CPU 31 may determine whether the mounted state is either the completely mounted state or the tool deterioration state.

The CPU 31 of the numerical control device 30 may estimate the expansion and contraction amount $L_b$ without calculating the amounts of heat $Q_m$, $Q_f$, and $Q_{ba}$. For example, the numerical control device 30 may detect a temperature change of the ball screw 41 using a temperature sensor, and estimate the expansion and contraction amount $L_b$ based on the temperature change. For example, the numerical control device 30 may detect a change in a predetermined position at an upper end of the ball screw 41 using a displacement sensor, and estimate the expansion and contraction amount $L_b$ based on the change in the predetermined position at the upper end.

The mathematical model for estimating the expansion and contraction amount $L_b$ is an example and may be modified as appropriate. The numerical control device 30 does not have to calculate all of the amounts of heat $Q_f$, $Q_m$, and $Q_{ba}$. For example, the numerical control device 30 may estimate the expansion and contraction amount $L_b$ based on the calculated amounts of heat $Q_m$ and $Q_{ba}$ without calculating the amount of heat $Q_f$. The numerical control device 30 may calculate the amounts of heat $Q_m$, $Q_f$, and $Q_{ba}$ for each of multiple sections obtained by dividing the ball screw 41 in the Z-axis direction, and estimate the expansion and contraction amount $L_b$.

In the processing of S63, the CPU 31 of the numerical control device 30 may acquire information about the Z-axis motor 51 different from the torque $T_m$ of the Z-axis motor 51 and the feed speed $V_m$. For example, in the processing of S63, the CPU 31 may acquire the temperature of the Z-axis motor 51 from a sensor that detects the temperature of the Z-axis motor 51.

The CPU 31 of the numerical control device 30 may generate an interpolation angle and an interpolation disturbance force obtained by interpolating (oversampling) the rotation angle $\theta$ and the disturbance force F and increase resolution. In this case, by deciding the peak angle $\varphi$ based on a differential value obtained by time differentiation of the interpolation disturbance force and the interpolation angle, the CPU 31 is able to approximate the peak angle $\varphi$ relatively closely to the rotation angle $\theta$ at the timing at which the plate cam 47 separates from the cam follower 49.

The CPU 31 of the numerical control device 30 may decide, as the peak angle $\varphi$, the rotation angle $\theta$ in the case where the differential value f indicates the maximum in the mounting operation. The CPU 31 may determine the mounted state based on the position of the main shaft 9 in the Z-axis direction estimated based on the rotation angle $\theta$ of the Z-axis motor 51. In this case, the CPU 31 corrects a peak position corresponding to the differential value f indicating the minimum among the differential values f by the estimated expansion and contraction amount $L_b$, and determines the mounted state.

It is sufficient if the correction of the peak angle $\varphi_t$ is based on the expansion and contraction amount $L_b$, and a method for deciding the corrected peak angle $\varphi_d$ is not limited to the above-described embodiment. For example, the CPU 31 may extract a predetermined number of expansion and contraction amounts $L_b$ from the expansion and contraction amounts $L_b$ stored in the RAM 33, calculate the difference $\rho$ of the peak angle $\varphi$ from an average of the extracted expansion and contraction amounts $L_b$, and subtract the difference $\rho$ from the peak angle $\varphi_t$, thereby deciding the corrected peak angle $\varphi_d$. In the above-described embodiment, the difference $\rho$ of the peak angle $\varphi$ is calculated from the expansion and contraction amount $L_b$, and the peak angle $\varphi_t$ is corrected based on the difference $\rho$. In contrast, the CPU 31 may estimate the position of the main shaft 9 in the Z-axis direction from the peak angle $\varphi_t$, correct the estimated position of the main shaft 9 in the Z-axis direction by the expansion and contraction amount $L_b$, and decide the corrected peak angle $\varphi_d$ from the corrected position of the main shaft 9 in the Z-axis direction. The CPU 31 may store the peak angle $\varphi_t$ for each tool 3 in the storage device 34, and subtract the expansion and contraction amount $L_{b1}$ from an average of the peak angles $\varphi_t$ for each tool 3, thereby deciding the corrected peak angle $\varphi_d$ for each tool 3.

In the above-described embodiment, the CPU 31 of the numerical control device 30 stores the corrected peak angle $\varphi_d$ and the number of times of mounting the tool 3 in association with each other in the storage device 34. In contrast, as an example, the CPU 31 may store the corrected peak angle $\varphi_d$ and a use time of the tool 3 in association with each other in the storage device 34.

The numerical control device 30 may extract a predetermined number of target peak angles in a descending order of newness from the second peak angle among the target peak angles, and calculate, as a statistical value, a value uniquely decided from the extracted predetermined number of peak angles $\varphi_d$, instead of the average value $\mu$. For example, the numerical control device 30 may calculate, as a statistical value, the median of the extracted predetermined number of peak angles $\varphi_d$.

The magnitude of the determination threshold $\varphi_{max}$ is not limited to $\mu+6\sigma$, and may be modified as appropriate.

The determination threshold $\varphi_{max}$ may be a predetermined value stored in the storage device 34, rather than a value decided by statistical processing of a predetermined number of target peak angles.

The difference $\Delta L_b$ calculated as the change amount in the expansion and contraction amount $L_b$ may be a value other than $L_{b1}-L_{b2}$. For example, the difference $\Delta L_b$ may be a difference between the expansion and contraction amount $L_{b1}$ that is latest and an expansion and contraction amount L1 that is stored earliest among the expansion and contraction amounts $L_b$ of the ball screw 41 stored in the RAM 33.

In the expansion and contraction amount estimation processing, the magnitude of the estimation period $t_s$ for estimating the expansion and contraction amount $L_b$ may be modified as appropriate. The estimation period $t_s$ may be, for example, the control period (0.5 ms).

The magnitude of the period $t_m$ for acquiring the torque $T_m$ of the Z-axis motor 51 and the feed speed $V_m$ of the main shaft 9 may be modified as appropriate. The period $t_m$ may be larger than the control period (0.5 ms).

In the above-described embodiment, in the numerical control device 30, a method for acquiring the disturbance force F may be modified as appropriate. For example, instead of using Expression 1, the numerical control device 30 may acquire, as the disturbance force F, a difference between the torque $T_m$ and inertial force.

In the numerical control device 30, low-pass filter processing does not have to be applied to the rotation angle $\theta$ and the disturbance force F. In this case, the processing in S28 and S80 may be omitted. In the numerical control device 30, high-pass filter or band-pass filter processing may be applied to the rotation angle $\theta$ and the disturbance force F.

In the numerical control device 30, in the parameter estimation processing, the expansion and contraction amount $L_b$ may be specified using a disturbance force F other than that occurring during a tool change of the tool 3. For example, the expansion and contraction amount $L_b$ may be specified using a disturbance force F generated by rotating the X-axis motor 53, moving the table 13 to an opposite side of the motor and pressing it against a stroke end.

A configuration of the Z-axis movement mechanism 8 may be modified as appropriate. The Z-axis movement mechanism 8 may have a configuration in which the main shaft 9 is moved by rotation of the Z-axis motor 51 instead of the ball screw 41. The Z-axis movement mechanism 8 may include, for example, a sliding screw extending in the Z-axis direction and a spline shaft with teeth formed in the Z-axis direction, instead of the ball screw 41. In this case, the sliding screw and the spline shaft are an example of the "feed shaft" of the present disclosure.

In the above-described embodiment, the peak angle $\varphi$ is decided with the differential value f of the disturbance force F included in the torque $T_m$ as a feature value. However, the feature value for determining the peak angle $\varphi$ may be modified as appropriate. For example, the numerical control device 30 may, without differentiating the disturbance force F, decide the peak angle $\varphi$ with the disturbance force F (torque $T_m$) that varies with time as a feature value. In this case, the numerical control device 30 may decide, as the peak angle $\varphi$, the rotation angle $\theta$ corresponding to the disturbance force F indicating either the maximum or the minimum of the disturbance force F.

The numerical control device 30 may decide the peak angle $\varphi$ with the torque $T_m$ that varies with time as a feature value. In this case, the numerical control device 30 may decide, as the peak angle $\varphi$, the rotation angle $\theta$ corresponding to the torque $T_m$ indicating either the maximum or the minimum of the torque $T_m$.

The numerical control device 30 may decide the peak angle $\varphi$ with the following as a feature value: a squared value of the disturbance force F (torque $T_m$), a value obtained by second-order differentiation of the disturbance force F (torque $T_m$), a value obtained by averaging the disturbance force F (torque $T_m$) within a predetermined time period, or the like.

The numerical control device 30 does not have to use the rotation angle $\theta$ corresponding to the differential value f indicating the minimum as the peak angle $\varphi$ in the mounting operation. The numerical control device 30 may use the rotation angle $\theta$ corresponding to the differential value f indicating the maximum as the peak angle $\varphi$ in the mounting operation. The numerical control device 30 may use the rotation angle $\theta$ corresponding to the differential value f indicating the maximum as the peak angle $\varphi$ in the detachment operation. The numerical control device 30 may use the rotation angle $\theta$ corresponding to the differential value f indicating the minimum as the peak angle $\varphi$ in the detachment operation.

The numerical control device 30 does not have to decide, as the peak angle $\varphi$, the rotation angle $\theta$ corresponding to the differential value f indicating either the maximum or the minimum among the differential values f. For example, the numerical control device 30 may decide, as the peak angle $\varphi$, a rotation angle $(\theta-\theta 1)$ offset by a predetermined angle $\theta 1$ from the rotation angle $\theta$ corresponding to the differential value f indicating the minimum. For example, the numerical control device 30 may decide, as the peak angle $\varphi$, a rotation angle $(\beta\theta)$ obtained by multiplying the rotation angle $\theta$ corresponding to the differential value f indicating the minimum by a predetermined coefficient $\beta$.

<Others>

In the above-described embodiment, the Z-axis direction is an example of the "predetermined direction" of the present disclosure. The ball screw 41 is an example of the "feed shaft" of the present disclosure. The Z-axis motor 51 is an example of the "motor" of the present disclosure. The CPU 31 executing the expansion and contraction amount estimation processing is an example of the "estimation part" of the present disclosure. The CPU 31 executing the processing of S77 is an example of the "first acquisition part" of the present disclosure. The CPU 31 executing the processing of S101 is an example of the "determination part", "correction determination part", and "statistical determination part" of the present disclosure. The CPU 31 executing the processing of S63 is an example of the "second acquisition part" of the present disclosure. The CPU 31 executing the processing of S64 is an example of the "calculation part" of the present disclosure. The angular speed is an example of the "rotation speed" of the present disclosure. The CPU 31 executing the processing of S81 is an example of the "differentiation part" of the present disclosure. The CPU 31 executing the processing of S91 is an example of the "decision part" of the present disclosure. The peak angle $\varphi_d$ is an example of the "corrected peak angle" of the present disclosure. The CPU 31 executing the processing of S95 is an example of the "second decision part" of the present disclosure. The CPU 31 executing the processing of S96 is an example of the "storage part" of the present disclosure. The CPU 31 executing the processing of S99 is an example of the "statistical processing part" of the present disclosure. The difference $\Delta L_b$ is an example of the "difference" of the present disclosure. The threshold $\Delta L_{bmax}$ is an example of the "threshold" of the present disclosure. The period $t_m$ is an example of the "control period" of the present disclosure. The expansion and contraction amount estimation processing is an example of the "estimation process" of the present disclosure. The processing of S77 is an example of the "first acquisition process" of the present disclosure. The processing of S101 is an example of the "determination process" of the present disclosure.

Description of Reference Numerals

    1: machine tool
    3: tool
    9: main shaft
    20: tool changer
    30: numerical control device
    31: CPU
    41: ball screw
    51: Z-axis motor

**Claims**

1. A numerical control device that controls an operation of a machine tool, the machine tool comprising a main shaft that mounts a tool, a feed shaft extending in a predetermined direction, and a motor that rotates the feed shaft around an axis extending in the predetermined direction, in which the motor rotates the feed shaft to thereby move the main shaft and allow the tool gripped by a tool changer to be mounted on the main shaft, wherein the numerical control device is **characterized by** comprising:

   an estimation part, estimating an expansion and contraction amount of the feed shaft in the predetermined direction;
   a first acquisition part, acquiring a torque of the motor in a mounting operation of the tool; and
   a determination part, determining a mounted state of the tool with respect to the main shaft based on the expansion and contraction amount estimated by the estimation part and the torque acquired by the first acquisition part.

2. The numerical control device as claimed in claim 1, wherein

   the estimation part comprises:

      a second acquisition part, acquiring information about the motor that drives when moving the main shaft in the predetermined direction via the feed shaft; and
      a calculation part, calculating amount of heat entering and exiting the feed shaft based on the information acquired by the second acquisition part, and

   the estimation part estimates the expansion and contraction amount based on the amount of heat calculated by the calculation part.

3. The numerical control device as claimed in claim 2, wherein

the second acquisition part acquires, as the information, the torque and a rotation speed of the motor.

4. The numerical control device as claimed in claim 1, wherein

the first acquisition part further acquires a rotation angle of the motor; and
the determination part comprises:

a differentiation part, differentiating the torque acquired by the first acquisition part and calculating a differential value of the torque corresponding to the rotation angle;
a first decision part, deciding, as a peak angle, the rotation angle corresponding to the differential value indicating either maximum or minimum among the differential values calculated by the differentiation part;
a second decision part, deciding a corrected peak angle by correcting the peak angle decided by the first decision part based on the expansion and contraction amount estimated by the estimation part; and
a correction determination part, determining the mounted state based on the corrected peak angle decided by the second decision part.

5. The numerical control device as claimed in claim 4, wherein
the determination part comprises:

a storage part, storing the corrected peak angle decided by the second decision part and number of uses or a use time of the tool with respect to the main shaft in association with each other;
a statistical processing part, performing statistical processing based on a plurality of the corrected peak angles stored by the storage part and calculating a statistical value; and
a statistical determination part, determining the mounted state based on the statistical value calculated by the statistical processing part.

6. The numerical control device as claimed in claim 1, wherein,

in a case where a difference between the expansion and contraction amount estimated by the estimation part for a n-th (n is an integer equal to or greater than 2) time and the expansion and contraction amount estimated by the estimation part for a (n-1)-th time is less than or equal to a threshold, the determination part determines the mounted state;
in a case where the difference is greater than the threshold, the determination part does not determine the mounted state.

7. The numerical control device as claimed in claim 1, wherein
the estimation part estimates the expansion and contraction amount in an estimation period longer than a control period of the numerical control device.

8. The numerical control device as claimed in claim 1, wherein
the first acquisition part acquires the torque and a rotation speed for each control period of the numerical control device.

9. A determination method for a mounted state of a tool with respect to a main shaft in a machine tool, the machine tool comprising a main shaft that mounts a tool, a feed shaft extending in a predetermined direction, and a motor that rotates the feed shaft around an axis extending in the predetermined direction, in which the motor rotates the feed shaft to thereby move the main shaft to allow the tool gripped by a tool changer to be mounted on the main shaft, wherein the determination method is **characterized by** comprising:

an estimation process for estimating an expansion and contraction amount of the feed shaft in the predetermined direction;
a first acquisition process for acquiring a torque of the motor in a mounting operation of the tool; and
a determination process for determining the mounted state based on the expansion and contraction amount estimated by the estimation process and the torque acquired by the first acquisition process.

FIG. 1

FIG. 2

FIG. 3

FIG. 4

FIG. 5

FIG. 6

~59

| | | | | |
|---|---|---|---|---|
| Condition table | | | | |
| No. | Control command | First drive condition | Second drive condition | Time [h] |
| 1 | First reciprocation command | Reciprocate at F5000 within machining area | Tool change | 4 |
| 2 | Stop command | Stop for predetermined time | Tool change | 4 |
| 3 | Second reciprocation command | Reciprocate at F20000 within machining area | Tool change | 4 |
| 4 | Stop command | Stop for predetermined time | Tool change | 4 |
| 5 | Third reciprocation command | Reciprocate at fast forward within machining area +1.05 s stop | Tool change | 4 |
| 6 | Stop command | Stop for predetermined time | Tool change | 4 |
| 7 | End command | – | – | – |

# FIG. 7

Parameter estimation processing

Read block ～S1

End command? ～S2  NO

YES

Start clocking ～S3

First drive condition processing ～S4

End time? ～S5  NO

YES

Predetermined time? ～S6  NO

YES

Second drive condition processing ～S8

K = K+1 ～S10

Estimate parameter ～S11

K = 1 ～S12

End

FIG. 8

Second drive condition processing

Start lifting of main shaft — S21

ATC origin has been reached? — S22
NO
YES

Stop lifting — S23

Start lowering of main shaft — S24

Start acquisition of θ and F — S25

θ and F have been acquired? — S26
NO
YES

Machining origin has been reached? — S27
YES
NO

Filtering — S28    Stop acquisition of θ and F — S31

Differentiation processing — S29    Stop lowering — S32

Store θ and F — S30    Decide $\phi_j$ — S33

Store $\phi_j$ — S34

①

FIG. 9

①

S41

First time
after power-on?          NO

YES                                          S42

Decide and store $\phi_b$

S43

Calculate $\rho$

S44

Specify $L_b$

S45

Store $L_b$

S46

$j = j+1$

Return

## FIG. 10

—————— : Specified expansion and contraction amount $L_b$    —·—·—·— : Estimation curve

## FIG. 11

Period acquisition processing

Start counting — S51

Control period has elapsed? — S52
NO
YES

Acquire $T_m$ and $V_m$ — S53

Store $T_m$ and $V_m$ — S54

Reset clocking — S55

## FIG. 12

Expansion and contraction amount estimation processing

Start counting — S61

Estimation period has elapsed? — S62
NO
YES

Acquire $T_m$, $V_m$ and parameter — S63

Calculate $Q_m$, $Q_f$ and $Q_{ba}$ — S64

Estimate $L_b$ — S65

Store $L_b$ — S66

Reset clocking — S67

## FIG. 13

Tool change processing

Lifting of main shaft — S71

ATC origin has been reached? — S72
NO
YES

Stop lifting — S73

Acquire tool information — S74

Rotate magazine — S75

Start lowering of main shaft — S76

Start acquisition of θ and F — S77

θ and F have been acquired? — S78
NO
YES

Machining origin has been reached? — S79
YES
NO

Filtering — S80

Differentiation processing — S81

Store θ and F — S82

Stop acquisition of θ and F — S83

Stop lowering — S84

(2)

FIG. 14

② 

Decide $\phi_t$ — S91

Acquire $L_{b1}$ and $L_{b2}$ — S92

Calculate $\Delta L_b$ — S93

S94
$\Delta L_b \leq \Delta L_{bmax}$    NO

YES

Correct $\phi_t$ — S95

Store $\phi_d$ and number of times of mounting — S96

S97
Is there tool?    YES

NO

S98
Number of target peak angles ≥ predetermined number?    NO

YES

Statistical processing — S99

Decide $\phi_{max}$ — S100

S101
$\phi_{d1} \leq \phi_{max}$?    YES

NO

Delete $\phi_{d1}$ — S102

Notification processing — S103

End

FIG. 15

## INTERNATIONAL SEARCH REPORT

| | International application No. |
|---|---|
| | **PCT/JP2023/041430** |

| A. | CLASSIFICATION OF SUBJECT MATTER |
|---|---|

*B23Q 15/18*(2006.01)i; *B23Q 3/155*(2006.01)i; *B23Q 17/00*(2006.01)i; *G05B 19/404*(2006.01)i
FI:     B23Q15/18; B23Q3/155 F; B23Q17/00 B; G05B19/404 K

According to International Patent Classification (IPC) or to both national classification and IPC

| B. | FIELDS SEARCHED |
|---|---|

Minimum documentation searched (classification system followed by classification symbols)

B23Q15/18; B23Q3/155; B23Q17/00; G05B19/404

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2022-56673 A (BROTHER KOGYO KABUSHIKI KAISHA) 11 April 2022 (2022-04-11) paragraphs [0022]-[0027], [0031]-[0034], [0037]-[0064], [0077], fig. 1-10 | 1-5, 7-9 |
| A | | 6 |
| Y | JP 10-138091 A (FANUC CORP.) 26 May 1998 (1998-05-26) paragraphs [0010], [0018], [0026]-[0030], [0041], fig. 1, 3, 5-8 | 1-5, 7-9 |
| A | | 6 |
| Y | JP 2009-214283 A (BROTHER KOGYO KABUSHIKI KAISHA) 24 September 2009 (2009-09-24) paragraphs [0012], [0013], [0035] | 2-3, 8 |
| A | JP 2012-121134 A (CHIRON WERKE GMBH) 28 June 2012 (2012-06-28) | 1-9 |

☐ Further documents are listed in the continuation of Box C.     ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 December 2023** | **26 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/041430**

| Patent document cited in search report | | | Publication date (day/month/year) | Patent family member(s) | | | Publication date (day/month/year) |
|---|---|---|---|---|---|---|---|
| JP | 2022-56673 | A | 11 April 2022 | (Family: none) | | | |
| JP | 10-138091 | A | 26 May 1998 | US | 6456896 | B1 | |
| | | | | column 3, lines 28-41, column 5, lines 10-32, column 7, line 17 to column 8, line 35, column 11, lines 22-36, fig. 1, 3, 5-8 | | | |
| | | | | WO | 1998/021006 | A1 | |
| | | | | EP | 878267 | A1 | |
| JP | 2009-214283 | A | 24 September 2009 | DE | 102009013043 | A1 | |
| | | | | CN | 101530974 | A | |
| | | | | KR | 10-2009-0098709 | A | |
| | | | | TW | 200940243 | A | |
| JP | 2012-121134 | A | 28 June 2012 | US | 2012/0143369 | A1 | |
| | | | | EP | 2463737 | A2 | |
| | | | | DE | 102010054393 | A1 | |
| | | | | CN | 102554711 | A | |

Form PCT/ISA/210 (patent family annex) (January 2015)

**EP 4 628 252 A1**

**Patent documents cited in the description**

- JP 2022056673 A